(19) **Europäisches Patentamt**
**European Patent Office**
**Office européen des brevets**

(11) **EP 4 383 213 B1**

(12) **EUROPEAN PATENT SPECIFICATION**

(45) Date of publication and mention
of the grant of the patent:
**11.03.2026 Bulletin 2026/11**

(51) International Patent Classification (IPC):
**G06V 20/40** (2022.01)  **G06V 20/52** (2022.01)

(21) Application number: **22306803.2**

(52) Cooperative Patent Classification (CPC):
**G06V 20/40; G06V 20/52**

(22) Date of filing: **07.12.2022**

(54) **METHOD AND DEVICE FOR DETECTING AN ANOMALY IN A VIDEO**

VERFAHREN UND VORRICHTUNG ZUR ERKENNUNG EINER ANOMALIE IN EINEM VIDEO

PROCÉDÉ ET DISPOSITIF DE DÉTECTION D'UNE ANOMALIE DANS UNE VIDÉO

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**12.06.2024 Bulletin 2024/24**

(73) Proprietors:
• **TOYOTA JIDOSHA KABUSHIKI KAISHA**
  **Aichi-Ken 471-8571 (JP)**
• **Institut National de Recherche en Informatique et en Automatique**
  **78153 Le Chesnay Cedex (FR)**

(72) Inventors:
• **FRANCESCA, Gianpiero**
  **1140 BRUSSELS (BE)**
• **GARATTONI, Lorenzo**
  **1140 BRUSSELS (BE)**
• **KONG, Quan**
  **Tokyo, 103-0022 (JP)**
• **MAJHI, Snehashis**
  **06902 VALBONNE (FR)**

• **BREMOND, François**
  **06902 VALBONNE (FR)**

(74) Representative: **Cabinet Beau de Loménie**
  **103, rue de Grenelle**
  **75340 Paris Cedex 07 (FR)**

(56) References cited:
• **SINGH KULDEEP ET AL: "Crowd anomaly detection using Aggregation of Ensembles of fine-tuned ConvNets", NEUROCOMPUTING, ELSEVIER, AMSTERDAM, NL, vol. 371, 27 August 2019 (2019-08-27), pages 188 - 198, XP085895054, ISSN: 0925-2312, [retrieved on 20190827], DOI: 10.1016/J.NEUCOM.2019.08.059**
• **XIANLIN ZENG ET AL: "A Hierarchical Spatio-Temporal Graph Convolutional Neural Network for Anomaly Detection in Videos", ARXIV.ORG, CORNELL UNIVERSITY LIBRARY, 201 OLIN LIBRARY CORNELL UNIVERSITY ITHACA, NY 14853, 8 December 2021 (2021-12-08), XP091115365**

**Description**

BACKGROUND OF THE INVENTION

1. Field of the Invention

The present invention relates to the field of video processing using machine learning and, especially, to the field of video anomaly detection. More particularly, the present invention relates to a method and device for detecting an anomaly in a video using a neural network and, also, to a method for training a neural network, a surveillance system, and a computer program. The present invention is particularly advantageous for implementing autonomous surveillance systems, but such an application is only given as an illustrative example and should not limit the invention.

2. Description of Related Art

The detection of an anomaly in a video is a computer-vision task critical to numerous applications such as autonomous surveillance systems. Typically, autonomous surveillance systems are used to monitor public spaces, factories, etc. The purpose of such a surveillance system is to detect an anomaly in the video (e.g. an aggression, a car accident, or an explosion) and, in addition, to localise the anomaly temporally.

However, the implementation of an autonomous surveillance system capable of detecting and localising temporally an anomaly in a video is particularly demanding. In practice, anomalous events rarely occur in comparison to normal events. It is hence difficult and costly to collect anomaly videos with precise temporal annotations for developing such an autonomous surveillance system.

Therefore, for anomaly detection, numerous existing solutions rely on autoencoder neural networks trained using unsupervised learning with exclusively normal data (easily collected). Then, any event that differs from the learned normal distribution is considered an anomaly. These solutions hence present the drawback of generating false alarms for any unknown normal event.

Furthermore, it has also been proposed to train neural networks to detect anomalies by using both normal and abnormal videos with video-level labels (i.e. weakly-supervised learning). In such cases, a training video is either labelled as normal, or abnormal (i.e. with an anomaly) but the anomaly is not localised in the video. For example, a neural network for anomaly detection trained on weakly-labelled videos is presented in Sultani et al., "Real-world anomaly detection in surveillance videos", IEEE Conference on Computer Vision and Pattern Recognition, 2018. In comparison to the previously discussed unsupervised approaches, existing solutions based on weakly-supervised learning provide superior generalisation capabilities and detection performance. Nevertheless, the performances of these solutions are limited for the following reasons. Literature 1 discloses a computer-implemented method for detecting an anomaly in a video of a scene using convolutional neural network for spatio-temporal feature extraction. Literature 2 discloses the use of a convolutional neural network for detecting anomalies in a video, based on anomaly scores that relate to human activities. Literature 1: SINGH KULDEEP ET AL: "Crowd anomaly detection using Aggregation of Ensembles of fine-tuned ConvNets", 1-15 INV. G06V20/40 G06V20/52 NEUROCOMPUTING, ELSEVIER, AMSTERDAM, NL, vol. 371, 27 August 2019 (2019-08-27), pages 188-198, XP085895054, ISSN: 0925-2312, DOI: 10.1016/J.NEUCOM.2019.08.059. Literature 2: XIANLIN ZENG ET AL: "A Hierarchical Spatio-Temporal Graph Convolutional Neural Network for Anomaly Detection in Videos", ARXIV.ORG, CORNELL UNIVERSITY LIBRARY, 201 OLIN LIBRARY CORNELL UNIVERSITY ITHACA, NY 14853, 8 December 2021 (2021-12-08), XP091115365.

In fact, existing solutions using weak-supervision suffer from non-optimal separation between normality and anomaly classes (i.e. non-optimal optimization). In addition, state-of-the-art neural networks are trained to detect anomalies using global information of the scene of the video (i.e. features of whole frames). As such, they are optimised to detect only anomalies characterised by global motion in the video (e.g. an explosion). The reliability of existing solutions is thus not fully satisfactory as they fail to detect anomalies characterised by local motion (e.g. an assault involving humans).

Therefore, there exists a need for a reliable solution for detecting and localising temporally an anomaly in a video.

SUMMARY OF THE INVENTION

The present invention has been made in the light of the above problems, and the embodiments of the invention are defined by appended claims.

According to an aspect, the invention provides a computer-implemented method for detecting at least one anomaly in a video of a scene using a neural network, the neural network comprising a first neural sub-network, a second neural sub-network (distinct from the first neural sub-network), and a coupler, the method comprising:

- a step of obtaining, using the first neural sub-network, first anomaly scores for a plurality of temporal segments of the video, the first anomaly scores being representative of anomalous human activities, the first sub-neural network using portions of images of the video associated with persons detected in the video and outputting the first anomaly scores;
- a step of obtaining, using the second neural sub-network, second anomaly scores for the temporal segments of the video, the second anomaly scores being representative of anomalous events in the scene, the second sub-neural network using entire images of the video and outputting the second anomaly scores; and
- a step of obtaining, using the coupler, aggregated anomaly scores for the temporal segments of the video, based on a weighted sum (with non-zero weights) of the first and second anomaly scores.

Within the context of the invention, we use the term "anomaly" to refer to a class of events considered as abnormal with respect to reference data. For example, the following events can be considered as anomalies: an explosion, a road accident, an assault, a fire.

Furthermore, we use the term "scene" to refer to a sequence of a video, e.g. a view from the camera that captures the video. Typically, the scene may be fixed (captured by a static camera) and may comprise one or more persons. It should also be noted that the term "temporal segment of a video" refers to a set of multiple consecutive images (i.e. frames) of the video.

The present invention allows detecting reliably and localising temporally anomalies in videos.

In this purpose, the present invention proposes using a neural network comprising two neural sub-networks, namely said first and second neural sub-networks. On the one hand, the first neural sub-network allows learning discriminative spatio-temporal features representations for detecting human-centric anomalies (e.g. an assault). On the other hand, the second neural sub-network allows learning discriminative representations for detecting scene-centric anomalies (e.g. an explosion). In addition, the present invention proposes using a coupler to capitalize on the respective specificities of the first and second sub-networks and, thereby, allows detecting both human-centric and scene-centric anomalies in videos.

As previously discussed, state-of-the-art solutions are trained to detect anomalies using only global spatio-temporal features of videos. For this reason, the existing solutions are optimised to detect anomalies characterised by global motion in the videos (i.e. scene-centric anomalies) and fail to detect anomalies characterised by local motion (i.e. human-centric). In contrast, the present invention allows, by combining the two sub-networks, capturing both local spatio-temporal features characterizing human activities and global spatio-temporal features characterizing scene-level events. Accordingly, the results of experiments conducted on publicly available anomaly detection datasets have shown that, in comparison to existing solutions, the present invention improves the reliability of anomaly detection in videos, in terms of the probability of correct detection and the probability of false alarm.

In particular, according to an implementation, the first sub-neural network uses portions of images of the temporal segments of the video to obtain the first anomaly scores and the second sub-neural network uses entire images (i.e. whole frames) of the temporal segments of the video to obtain the second anomaly scores.

In an embodiment, the first anomaly scores are obtained using a first convolutional neural network comprised in the first neural sub-network, the first convolutional neural network taking as input (only) one or more sets of portions of images of the temporal segments, said one or more sets of portions of images being respectively associated with persons detected in the video.

In this embodiment, it is proposed to track the persons detected in the video to determine the first anomaly scores representative of anomalous human activities.

For each person detected, and for each temporal segment of the video, a set of portions of the images (e.g. bounding boxes) of this temporal segment is used to track the person over this temporal segment. Such a set of portion of images is also referred to as a "tracklet". Typically, a set of portions of images may be composed of several bounding boxes (one for each image with the person present) tracking the person over a temporal segment of the video.

This embodiment further proposes using the first convolutional neural network to obtain a feature vector for each tracklet. These features vectors are then used to determine the first anomaly scores representative of anomalous human activities.

Thereby, this embodiment allows extracting local spatio-temporal features characterising human activities in the video and contributes to detecting reliably anomalous human activities (i.e. human-centric anomalies) in the video.

In an embodiment, the method comprises a step of determining magnitudes of feature maps provided by the first convolutional neural network and respectively associated with the persons detected in the video. In addition, in this embodiment, the first anomaly scores are obtained using (only) a predefined number of these feature maps whose magnitudes are the largest.

This embodiment allows selecting the feature maps associated with the persons whose behaviours are the most distinctive (assuming sharp changes in the spatio-temporal feature space as distinctive). This embodiment hence allows detecting reliably human-centric anomalies while maintaining a low-complexity implementation for scenarios with a large number of people present in the video.

In an embodiment, the coupler comprises a third neural sub-network, and weights of the weighted sum are obtained using the third neural sub-network taking as input latent representations of the video (respectively provided by the first and second neural sub-networks).

In this embodiment, it is proposed to use a third neural sub-network to perform the coupling of the first neural sub-network (optimized for human-centric anomaly detection) and the second neural sub-network (optimized for scene-centric anomaly detection) based on latent representations of the video.

Specifically, the aggregated anomaly scores are obtained using a weighted sum of the first and second anomaly scores, the weights of the weighted sum being determined by the third neural sub-network specifically for the analysed video.

Thereby, this embodiment allows adapting the coupling of the first and second anomaly scores as function of the analysed video. More generally, this embodiment allows optimizing the coupling of the first and the second neural sub-networks to improve the reliability of detection of human and scene centric anomalies.

In an embodiment, for (each) one of the temporal segments, the weights of the weighted sum are obtained based on:

- segment-level weights obtained using the third neural sub-network and associated with this temporal segment; and

- video-level weights obtained using the third neural sub-network and associated with the video.

In this embodiment, considering a temporal segment of the video, the coupling of the first and second anomaly scores is adapted as function of both the considered temporal segment and, in addition, the general context of the video. As such, this embodiment allows further optimizing the coupling of the first and the second neural sub-networks. Improved reliability of anomaly detection follows as a result.

In an embodiment, the method comprises:

- a step of partitioning the video into the temporal segments; and

- at least one another step of partitioning the video into other temporal segments, the temporal segments and the other temporal segments having different lengths,

the second anomaly scores being obtained using a second convolutional neural network comprised in the second neural sub-network, the second convolutional neural network taking as input the entire images of the temporal segments and the other temporal segments of the video.

It should first be noted that here "partitioning a video into temporal segments" consists of dividing a video into several temporal segments (i.e. several sets of images) such that the temporal segments are disjoint and their union provides the entire video.

According to this embodiment, the second anomaly scores (representative of scene-centric anomalies) are obtained by inputting temporal segments of multiple lengths into a convolutional network. It allows extracting spatio-temporal features of the video with multiple temporal granularities and, thereby, capturing sharp and progressive changes in the video.

It follows that the obtained second anomaly scores are representative of both: short-length anomalies (e.g. an explosion) characterised by sharp changes; and long-length anomalies (e.g. a fire) characterised by progressive changes. Thereby, this embodiment contributes to detecting reliably anomalous events in the filmed scene (i.e. scene-centric anomalies).

In an embodiment, the method comprises a step of encoding feature maps provided by the second convolutional neural network for the temporal segments and the other temporal segments into an (single) encoded feature map using a long short-term memory neural network, and wherein the second anomaly scores are obtained using the encoded feature map.

As discussed above, the second convolutional neural network allows providing spatio-temporal features of the video with different temporal granularities, namely said feature maps.

Thereupon, this embodiment proposes encoding the feature maps associated with the different temporal granularities into a single encoded feature map to capture both sharp and progressive changes in the spatio-temporal features of the video.

In addition, the proposed encoding is performed using a long short-term memory neural network capable of learning temporal dependencies. As such, this embodiment allows learning discriminative representations for both short-length and long-length anomalies. Improved reliability of scene-centric anomaly detection follows as a result.

In an embodiment, the method comprises for (each) one of the temporal segments of the video, a step of detecting an anomaly in this temporal segment if (and only if) the respective aggregated anomaly score for this temporal segment exceeds a threshold.

This embodiment allows detecting reliably and localising temporally one or more anomalies in the analysed video based on the aggregated scores provided by the proposed neural network.

<u>According to another aspect,</u> the invention provides a computer-implemented method for training a neural network for detecting at least one anomaly in a video, the neural network comprising a first neural sub-network, a second neural sub-network, and a coupler, the method comprising:

- a step of obtaining anomaly scores for temporal segments of reference videos using the method for detecting at least one anomaly conforming to the invention, the reference videos being labelled with video-level labels and including normal videos and anomaly videos;

- a step of evaluating a loss function using the obtained anomaly scores for the normal reference videos and the obtained anomaly scores for the anomaly reference videos; and

- a step of updating parameters of the neural network to minimize the loss function.

For training the neural network, the present invention proposes using reference videos with video-level labels (i.e. weak supervision). Such a reference video is either labelled as normal or abnormal but, in the latter case, the anomaly is not localised in the video.

Therefore, it is worth emphasizing that, even though the reference videos include no temporal annotations, the proposed solution allows optimizing the neural network to detect reliably anomalies in videos and also to localize them temporally.

The training method may comprise one or more iterations of each of its steps.

<u>In an embodiment,</u> the loss function is based on a weighted sum (with non-zero weights) of:

- a first function comprising a sum of the anomaly scores obtained for the normal reference videos minus a sum of the anomaly scores obtained for the anomaly reference videos; and

- a second function comprising a difference between an error associated with the anomaly scores obtained for the anomaly reference videos and an error associated with the anomaly scores obtained for the normal reference videos.

According to this embodiment, the proposed training method relies on minimizing a loss function based on a weighted sum of said first and second functions. Specifically, the first function allows maximizing the separation between normal and anomaly classes at the video-level (context-level); the second function allows maximizing the separation between normal and anomaly classes at segment-level (instance-level).

In comparison to existing solutions, the proposed loss function ensures optimal separation between normal and anomaly classes under weak-supervision. This embodiment hence allows enhanced optimization of the neural network based on reference videos with video-level label.

<u>In an embodiment,</u> the loss function is evaluated using:

$$L(\boldsymbol{D_n}, \boldsymbol{D_a}) = \lambda_1 \cdot L_{\text{ctx}}(\boldsymbol{D_n}, \boldsymbol{D_a}) + \lambda_2 \cdot L_{\text{ins}}(\boldsymbol{D_n}, \boldsymbol{D_a}),$$

$$L_{\text{ctx}}(\boldsymbol{D_n}, \boldsymbol{D_a}) = \max\left(0, 1 - \sum_{i=1}^{T} D_a^i + \sum_{i=1}^{T} D_n^i\right), \text{ and } L_{\text{ins}}(\boldsymbol{D_n}, \boldsymbol{D_a}) = \left\|E_{D_a} - E_{D_n}\right\|,$$

In the above expression, $L_{\text{ctx}}$ and $L_{\text{ins}}$ denote said first and second functions; $\lambda_1$ and $\lambda_2$ are positive real coefficients (e.g. $\lambda_1 = \lambda_2 = 1/2$); $T$ is a number of temporal segments; $\boldsymbol{D_n} = \left\{D_n^i\right\}_{1 \le i \le T}$ are the anomaly scores obtained for the temporal segments of the normal reference videos; and $\boldsymbol{D_a} = \left\{D_a^i\right\}_{1 \le i \le T}$ are the anomaly scores obtained for the temporal segments of the anomaly reference videos.

Further, $E_{Dn}$ denotes the error associated with the anomaly scores obtained for the normal reference videos and $E_{Da}$ denotes the error associated with the anomaly scores obtained for the anomaly reference videos. The errors $E_{Da}$ and $E_{Dn}$ are respectively expressed by:

$$E_{D_a} = \frac{1}{T}\sum_{i=1}^{T}\left(D_a^i - P_a^i\right)^2, \text{ with } P_a^i = \begin{cases} 0, \text{ if } D_a^i \le D_{\text{ref}} \\ 1, \text{ if } D_a^i > D_{\text{ref}} \end{cases},$$

$$E_{D_n} = \frac{1}{T}\sum_{i=1}^{T}\left(D_n^i - P_n^i\right)^2, \text{ with } P_n^i = 0,$$

with

$$D_{\text{ref}} = \left(\max_i(D_a^i) + \min_i(D_a^i)\right)/2.$$

This embodiment allows achieving optimal separation between normal and anomaly classes under weak-supervision. In particular, the proposed loss function $L$ achieves such optimal separation by combining: the first function $L_{\text{ctx}}$ to separate classes at the video-level; and the second function $L_{\text{ins}}$ to separate classes at the segment-level

In particular, the following remarks should be noted with regards to the second function $L_{\text{ins}}$. To achieve optimum separation of normal and anomaly classes at the segment-level (instance-level), this embodiment proposes to: generate pseudo temporal annotations $\boldsymbol{P_n} = \{P_n^i\}_i$, $\boldsymbol{P_a} = \{P_a^i\}_i$ (0 for normal, 1 for anomaly); and, then, to evaluate the errors $E_{Dn}$, $E_{Da}$ between the obtained anomaly scores $\boldsymbol{D_n}$, $\boldsymbol{D_a}$ and the generated pseudo labels $\boldsymbol{P_n}$, $\boldsymbol{P_a}$.

Since the normal reference videos contain no anomaly, the pseudo labels $P_n^i$ always equal 0. In contrast, the anomaly reference videos contain temporal segments with and without and anomalies. Thus, the pseudo labels $\boldsymbol{P_a}$ are generated by comparing the obtained anomaly scores $\boldsymbol{D_a}$ to a dynamic reference point $D_{\text{ref}}$.

The reference point $D_{\text{ref}}$ might be noisy at the first training iteration, which may lead to the generation of noisy pseudo labels $\boldsymbol{P_a}$. However, by minimizing $\|E_{Da} - E_{Dn}\|$ as proposed, the correct pseudo labels $\boldsymbol{P_n}$ can rectify noisy pseudo labels $\boldsymbol{P_a}$ over the training iterations. Accordingly, the proposed loss function allows achieving a self-rectification procedure.

According to another aspect, the invention provides a neural network for detecting at least one anomaly in a video of a scene, the neural network comprising:

- a first neural sub-network configured to obtain first anomaly scores for a plurality of temporal segments of the video, the first anomaly scores being representative of anomalous human activities, the first sub-neural network using portions of images of the video associated with persons detected in the video and outputting the first anomaly scores;

- a second neural sub-network configured to obtain second anomaly scores for the temporal segments, the second anomaly scores being representative of anomalous events in the scene, the second sub-neural network using entire images of the video and outputting the second anomaly scores; and

- a coupler configured to obtain aggregated anomaly scores for the temporal segments based on a weighted sum of the first and second anomaly scores.

In an embodiment, the neural network has been trained using the training method conforming to the invention.

Further, the invention extends to a computer-readable medium having stored thereon a program for implementing a neural network conforming to the invention. In addition, the invention also provides a computer-readable medium having stored thereon data representative of a neural network conforming to the invention, such as hyperparameters and/or weights.

According to another aspect, the invention provides a device for detecting at least one anomaly in a video, the device comprising (i.e. is configured to implement) a neural network conforming to the invention.

In an embodiment, the proposed device comprises a detector configured, for (each) one of a plurality of temporal segments of the video, to detect an anomaly in this temporal segment if (and only if) the aggregated anomaly score for this temporal segment exceeds a threshold.

In an embodiment, the detector is configured to provide an alarm signal if (and only if) an anomaly is detected in the video. For example, the alarm signal indicates the detection of an anomaly. It may also comprise the images of the temporal segment associated with the anomaly.

According to another aspect, the invention provides a surveillance system comprising: a camera for obtaining a video; and a device conforming to the invention for detecting at least one anomaly in the video.

In an embodiment, the surveillance system comprises a restitution device configured to output an alarm signal provided by the anomaly detection device. The restitution device may comprise a display and/or a speaker.

According to another aspect, the invention provides a computer program comprising instructions which, when the program is executed by at least one processor or a computer, cause said at least one processor or computer to implement a method conforming to the invention.

It should be noted that the computer programs referred to here may use any programming language, and be in the form of source code, object code, or code intermediate between source code and object code, such as in a partially compiled form, or in any other desirable form.

According to another aspect, the invention provides a computer-readable medium having stored thereon the computer program conforming to the invention.

The computer-readable medium referred to in this statement may be any entity or device capable of storing the program and readable by any computer equipment, including a computer. For example, the medium may include a storage medium, or a magnetic storage medium, such as a hard drive. Alternatively, the storage medium may correspond to a computer integrated circuit in which the program is incorporated and adapted to execute a method as described above or to be used in the execution of such method.

It should be emphasized that the proposed neural network, device, surveillance system, computer program, and computer-readable medium present the advantages described above in relation with the proposed method for detecting an anomaly in a video.

BRIEF DESCRIPTION OF THE DRAWINGS

Features, advantages, and technical and industrial significance of exemplary embodiments of the invention will be described below with reference to the accompanying drawings, in which like reference signs denote like elements, and wherein:

FIG. 1 illustrates the architecture of a surveillance system according to an embodiment of the invention;

FIG. 2A and 2B respectively illustrate the architecture of a device and steps of a method for detecting an anomaly in a video according to an embodiment of the invention;

FIG. 3 illustrates steps of a method for training a neural network used for detecting an anomaly in a video according to embodiments of the invention;

FIG. 4A and 4B respectively illustrate the architecture of a device and steps of a method for detecting an anomaly in a video according to embodiments of the invention;

FIG. 5A, 5B, and 5C illustrate the architecture of a device and steps of a method for detecting an anomaly in a video according to embodiments of the invention; and

FIG. 6A and 6B illustrate the architecture of a surveillance device and steps of a method for detecting an anomaly in a video according to embodiments of the invention.

DETAILED DESCRIPTION OF EXAMPLE EMBODIMENTS

The present invention is particularly advantageous for implementing a surveillance system. The following description of the invention will refer to this particular application, which is provided only as an illustrative example and should not limit the invention.

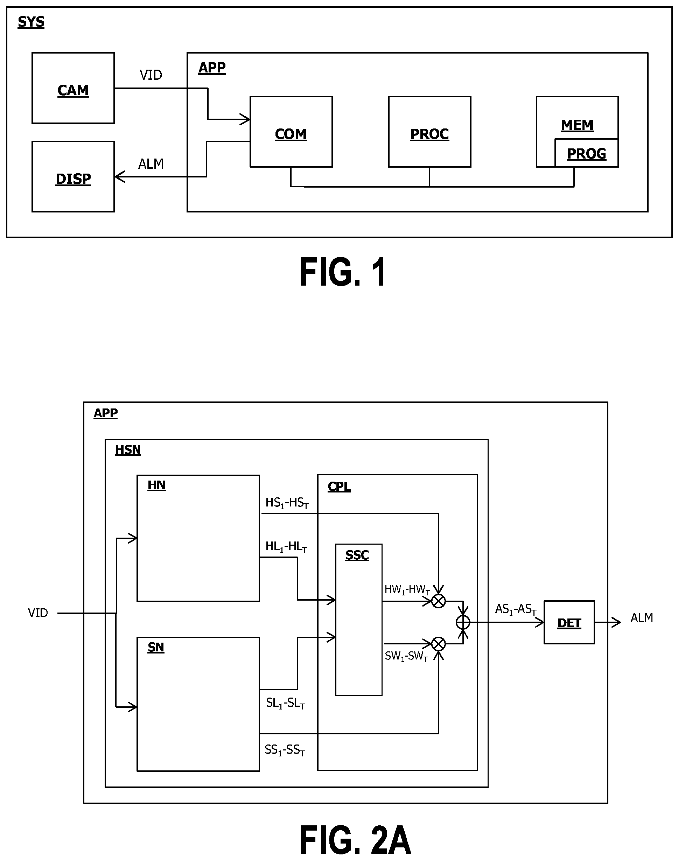

**FIG. 1** illustrates the architecture of a surveillance system according to an embodiment of the invention. This figure is described hereafter to introduce the context of the invention and provide an example application.

The surveillance system SYS of FIG. 1 comprises: a camera CAM; an anomaly detection device APP; and a restitution device DISP.

The camera CAM is configured to obtain (i.e. acquire) a video VID of a scene. Typically, the filmed scene may be fixed (i.e. the camera CAM is static). The scene of the video VID may comprise one or more persons. The video VID may comprise one or more anomalies, for instance human-centric anomalies (e.g. an assault, a shoplifting), or scene-centric anomalies (e.g. an explosion, a road accident, a fire) or other anomalies.

The anomaly detection device APP is configured in this embodiment to: detect an anomaly in the video VID; and if (and only if) an anomaly is detected, provide an alarm signal ALM. The alarm signal ALM indicates that an anomaly has been detected in the video VID and, in addition, may comprise a temporal segment of the video VID associated with the detected anomaly.

The restitution device DISP is configured to output the alarm signal ALM. For instance, the restitution device DISP may comprise a display and/or a speaker. This restitution device DISP allows alerting a user that an anomaly is detected in the video VID. Thereby, timely anomaly prevention and investigation can be carried out.

The anomaly detection device APP comprises according to the embodiment of FIG. 1: at least one processing unit or processor PROC; and at least one memory MEM.

More particularly, the anomaly detection device APP has, according to an embodiment, the hardware architecture of a computer. As such, it may include a processor PROC, a random access memory, a read-only memory MEM, and a non-volatile memory. The memory MEM constitutes a storage medium conforming to the invention. The memory MEM is readable by processor PROC and stores a computer program PROG conforming to the invention. The computer program PROG comprises instructions for carrying out steps of a method conforming to the invention, when the computer program PROG is executed by the processor PROC.

As illustrated in FIG. 1, according to an embodiment, the device APP comprises a communication module COM configured to communicate with the camera CAM and/or the restitution device DISP. No limitation is attached to the nature of the communication interfaces between these devices APP, CAM, DISP, which can be wired or wireless, and can implement any protocol known to the skilled person.

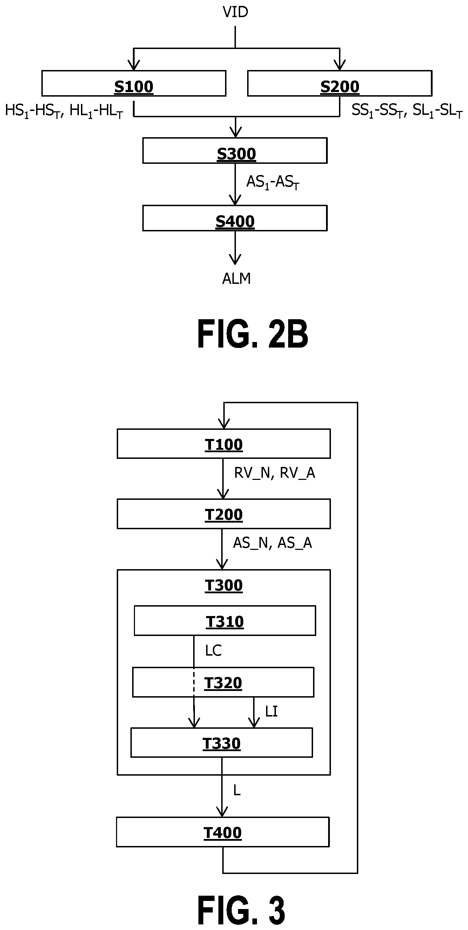

**FIG. 2A and 2B** respectively illustrate the architecture of a device and steps of a method for detecting an anomaly in a video according to an embodiment of the invention. Specifically, FIG. 2A and 2B respectively details the architecture and the operation of the anomaly detection device APP introduced in FIG. 1

As illustrated in FIG. 2B, the method for detecting an anomaly in a video at least one of the following steps S 100-S400 implemented by the anomaly detection device APP.

The anomaly detection device APP comprises: a neural network HSN; and a detector DET. For the sake of simplicity, the term "neural network" is used to refer to an artificial neural network.

The neural network HSN comprises: a first neural sub-network HN; a second neural sub-network SN; and a coupler CPL. It should be noted that the proposed training method for optimizing the parameters of the neural network HSN is described below in relation with FIG. 3.

The first neural sub-network HN is configured to compute - at step S100 - first anomaly scores $HS_1$-$HS_T$ for a plurality of temporal segments $t_1$-$t_T$ of the video VID (i.e. one anomaly score for each temporal segment). The first anomaly scores $HS_1$-$HS_T$ are representative of anomalous human activities (i.e. human-centric anomalies). For instance, an anomaly score may equal zero for a temporal segment with no anomaly, and may equal one for a temporal segment with an anomaly.

As illustrated in FIG. 1, the first neural sub-network HN takes as input the video VID and provides at its output the first anomaly scores $HS_1$-$HS_T$. The first sub-network HN is optimized to learn discriminative local spatio-temporal features characterising human-centric anomalies, such as local motion and subtle changes in the video.

In particular, it is worth emphasizing that the first sub-neural network HN uses portions of images of the temporal segments of the video VID to compute the first anomaly scores $HS_1$-$HS_T$.

In addition, in an embodiment, the first neural sub-network HN is configured to provide - at step S100 - latent representations $HL_1$-$HL_T$ of the video VID which are used by the coupler CPL.

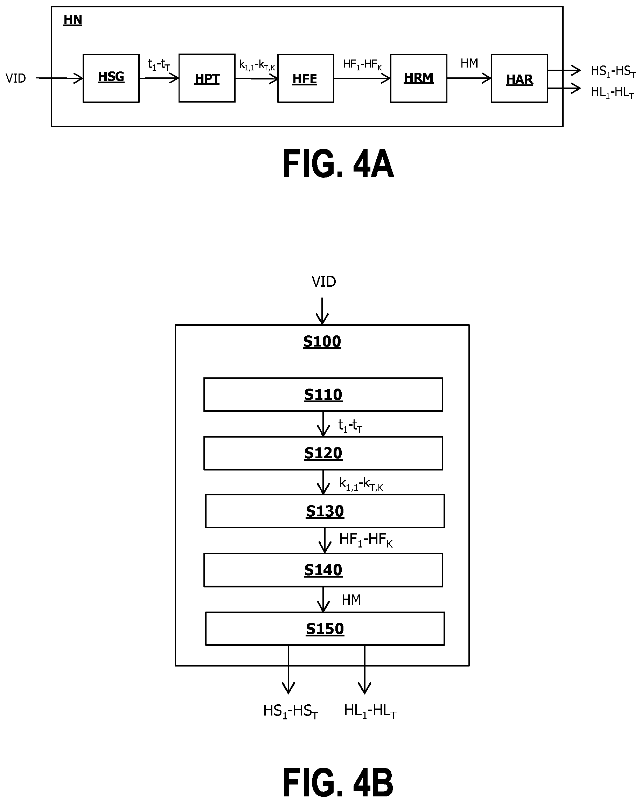

The architecture and operation of the first neural sub-network HN are detailed hereinafter in relation with FIG. 4A-4B. In the following, the elements (i.e. the blocks) of the first subnetwork HN are denoted by reference signs starting with H.

The second neural sub-network SN is configured to compute - at step S200 - second anomaly scores $SS_1$-$SS_T$ for the temporal segments $t_1$-$t_T$ of the video VID (i.e. one anomaly score for each temporal segment). The second anomaly scores $SS_1$-$SS_T$ are representative of anomalous events in the scene of the video VID (i.e. scene-centric anomalies).

As shown in FIG. 1, the second neural sub-network SN takes as input the video VID and provides at its output the second anomaly scores $SS_1$-$SS_T$. The second sub-network SN is optimized to learn discriminative global spatio-temporal features characterising scene-centric anomalies, such as strong changes and global motion in the video VID.

It is worth noting that the second sub-neural network SN uses entire images (whole frames) of the temporal segments of the video VID to compute the second anomaly scores $SS_1$-$SS_1$.

In an embodiment, the second neural sub-network SN is also configured to provide - at step S200 - latent representations $SL_1$-$SL_1$ of the video VID which are used by the coupler CPL.

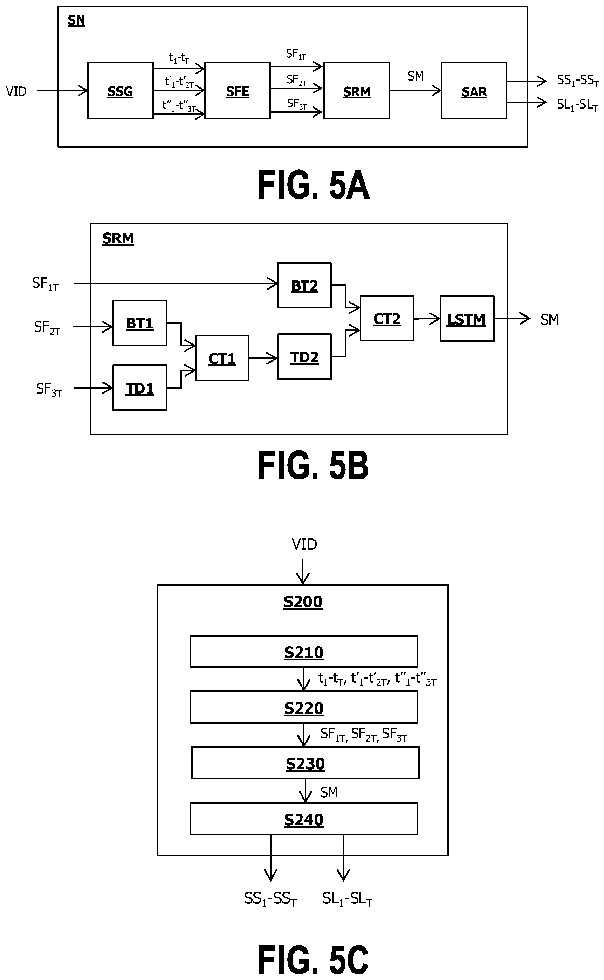

FIG. 5A-5C details the architecture and operation of the second sub-network SN. In the following, the elements (i.e. the blocks) of the second sub-network SN are denoted by reference signs starting with S.

It should be noted that steps S100 and S200 can be performed in parallel (i.e. simultaneously, or concurrently), or sequentially one after another (in any order).

<u>The coupler CPL</u> is configured to compute - at step S300 - aggregated anomaly scores $AS_1$-$AS_T$ for the temporal segments $t_1$-$t_T$ using a weighted sum of the first and second anomaly scores $HS_1$-$HS_T$, $SS_1$-$SS_T$.

For each temporal segment $t_i$, the aggregated anomaly score $AS_i$ is the sum of: the first anomaly score $HS_i$ (associated with this temporal segment) times a weight $HW_i$; and the second anomaly score $SS_i$ (associated with this temporal segment) times a weight $SW_i$.

In a particular embodiment illustrated in FIG. 1, the weights $HW_1$-$HW_T$ and $SW_1$-$SW_T$ are provided by a third neural sub-network SSC taking as input the latent representations $HL_1$-$HL_T$ and $SL_1$-$SL_T$.

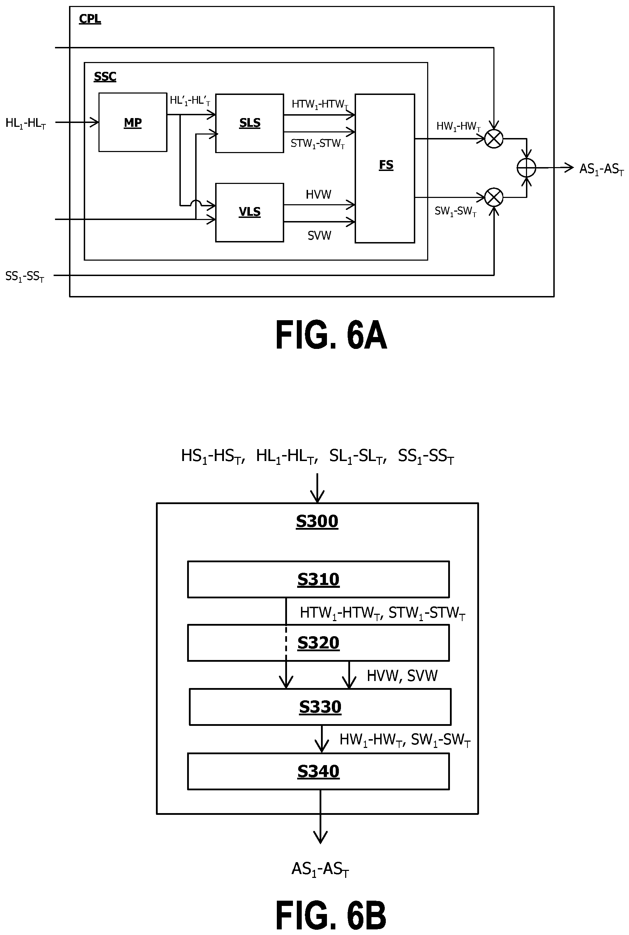

The architecture and operation of the coupler CPL are detailed in relation with FIG. 6A-6B.

<u>The detector DET</u> is configured to detect - at step S400 - at least one anomaly in the video VID. In an embodiment, the detector DET detect an anomaly in one of the temporal segments $t_i$ of the video VID, if the aggregated anomaly score $AS_i$ for this temporal segment $t_i$ exceeds a threshold.

In a particular embodiment, the detection of an anomaly in the video VID triggers the detector DET to provide the alarm signal ALM. The alarm signal ALM can be sent by the anomaly detection device APP to the restitution device DISP, via the communication module COM, for alerting a user of the detected anomaly.

The proposed solutions allows detecting reliably and localizing temporally anomalies in real-world videos with complex scenarios, wherein anomalies can be associated with anomalous human activities (i.e. human-centric anomalies), anomalous scene-level events (i.e. scene-centric anomalies), or a combination of both.

**FIG. 3** illustrates steps of a method for training a neural network used for detecting an anomaly in a video according to embodiments of the invention. This figure is described below to introduce the proposed training method of the neural network HSN.

The present invention proposes using weak supervision to train the neural network HSN. Thus, a set of reference videos with video-level labels is used. In this context, a reference video is labelled either as a normal video (i.e. no anomaly), or as an anomaly video (i.e. with an anomaly) but without temporal localisation of the anomaly.

Still, the proposed neural network HSN is used not only to detect an anomaly in a video but also to localise temporally the anomaly, the neural network HSN providing an anomaly score for each of the temporal segments of the video. Therefore, we emphasize that the proposed training method allows, using only reference videos with video-level labels, optimizing the neural-network HSN to temporally localise an anomaly in a video.

It should be noted that the proposed training method do not require temporal annotations of the reference videos for optimizing the neural network HSN, which allows reducing the required human labour.

As shown in FIG. 3, the proposed training method comprises at least one of the following steps T100-T400 and may include one or more iterations of each of these steps.

At step T100, a set of reference videos RV_N, RV_A is obtained. The reference videos RV_N, RV_A are labelled with video-level labels and include normal reference videos RV_N and anomaly reference videos RV_A.

<u>At step T200,</u> using the neural network HSN, anomaly scores AS_N and AS_A are respectively obtained for the temporal segments of the normal reference videos RV_N and of the anomaly reference videos RV_A. The anomaly scores AS_N, AS_A are obtained by implementing the previously described steps S100-S300 (i.e. the anomaly scores obtained here correspond to the aggregated anomaly scores provided by the neural network HSN).

We denote: $\boldsymbol{D_n} = \left\{ D_n^i \right\}_{1 \leq i \leq T}$ the obtained anomaly scores AS_N for the temporal segments of the normal reference videos RV_N; and $\boldsymbol{D_a} = \left\{ D_a^i \right\}_{1 \leq i \leq T}$ the obtained anomaly scores AS_A for the temporal segments of the anomaly reference videos RV_A - $T$ a number of temporal segments.

At the first training iteration, the parameters (e.g. the weights) of the neural network HSN can be initialized, for instance randomly. Such an initialization is *per se* known to the skilled person.

<u>At step T300,</u> a loss function L is evaluated using the obtained anomaly scores AS_N and AS_A. To this end, step T300 comprises the following steps T310-T330.

<u>At step T310,</u> a first function LC is evaluated using the following expression:

$$L_{\text{ctx}}(\boldsymbol{D_a}, \boldsymbol{D_n}) = \max\left( 0, 1 - \sum_{i=1}^{T} D_a^i + \sum_{i=1}^{T} D_n^i \right). (1)$$

The function $L_{\text{ctx}}$ computes the sum of the anomaly scores AS_A, AS_N to obtain video context and, then, maximizes the separation among them to ensure context separation. In other words, minimizing the function $L_{\text{ctx}}$ results in minimizing the anomaly scores for normal videos and maximizing the anomaly scores for anomaly videos - i.e. maximization of separation between normal and anomaly classes at the video-level (context-level).

At step T320, a second function LI is evaluated using the following expression:

$$L_{\text{ins}}(\boldsymbol{D_n}, \boldsymbol{D_a}) = \left\| E_{D_a} - E_{D_n} \right\|. \ (2)$$

It can be observed that the function $L_{\text{ins}}$ is based on (i.e. comprises) a difference between: an error $E_{D_a}$ associated with the anomaly scores AS_A obtained for the anomaly reference videos RV_A; and an error $E_{D_n}$ associated with the anomaly scores AS_N obtained for the normal reference videos RV_N.

In fact, the function $L_{\text{ins}}$ is proposed to achieve optimum separation of normal and anomaly classes at the instance-level. In other words, minimizing the second function $L_{\text{ins}}$ results in minimizing the anomaly scores AS_N for temporal segments without anomalies and maximizing the anomaly scores AS_N for temporal segments with anomalies - i.e. maximization of separation between normal and anomaly classes at the segment-level (instance-level).

To this end, it is proposed to generate a pseudo temporal annotation for each temporal segment (e.g. 0 for normal, 1 for anomaly). The function $L_{\text{ins}}$ evaluates the errors $E_{D_n}$, $E_{D_a}$ between the obtained anomaly scores $\boldsymbol{D_n}$, $\boldsymbol{D_a}$ and generated pseudo labels $\boldsymbol{P_n}$, $\boldsymbol{P_a}$.

Since the normal reference videos RV_N contain no anomaly, the pseudo labels $\boldsymbol{P_n}$ always equals 0. The error $E_{D_n}$ is hence expressed by:

$$E_{D_n} = \frac{1}{T} \sum_{i=1}^{T} \left( D_n^i - P_n^i \right)^2, \text{ with } P_n^i = 0. \ (4)$$

Differently, the anomaly reference videos RV_A contain temporal segments with and without and anomalies. Therefore, the pseudo labels $\boldsymbol{P_a}$ are computed by comparing the obtained anomaly scores $\boldsymbol{D_a}$ to a dynamic reference point $D_{\text{ref}} = \left( \max_i \left( D_a^i \right) + \min_i \left( D_a^i \right) \right)/2$ . The error $E_{D_a}$ is hence expressed by:

$$E_{D_a} = \frac{1}{T} \sum_{i=1}^{T} \left( D_a^i - P_a^i \right)^2, \text{ with } P_a^i = \begin{cases} 0, \text{ if } D_a^i \leq D_{\text{ref}} \\ 1, \text{ if } D_a^i > D_{\text{ref}} \end{cases}. \ (5)$$

The generation of pseudo labels $\boldsymbol{P_a}$ for the anomaly reference videos RV_A depends on choosing the appropriate reference point $D_{\text{ref}}$. At the first training iteration, the reference point $D_{\text{ref}}$ might be noisy and may lead to generating noisy pseudo labels $\boldsymbol{P_a}$. Still, by minimizing the difference between errors $E_{D_n}$ and $E_{D_a}$ as proposed, the correct pseudo labels $\boldsymbol{P_n}$ can rectify noisy pseudo labels $\boldsymbol{P_a}$. Accordingly, the second function $L_{\text{ins}}$ achieves a self-rectification procedure.

At step T330, the loss function L is evaluated based on a weighted sum of the first LC and second function LI. In particular, the loss function L is expressed by:

$$L(\boldsymbol{D_n}, \boldsymbol{D_a}) = \lambda_1 \cdot L_{\text{ctx}}(\boldsymbol{D_n}, \boldsymbol{D_a}) + \lambda_2 \cdot L_{\text{ins}}(\boldsymbol{D_n}, \boldsymbol{D_a}),$$

where $\lambda_1$ and $\lambda_2$ are positive real coefficients (e.g. $\lambda_1 = \lambda_2 = 1/2$).

It should be noted that the proposed loss function L ensures optimal separation between normal and anomaly classes at both video-level (i.e. context-level) and segment-level (i.e. instance-level). In comparison to existing solutions, the proposed training method allows enhanced optimization of the neural network HSN under weak-supervision.

At step T400, the parameters of the neural network HSN are updated to minimise the loss function L.

For instance, the weights of the neural network HSN can be updated using backpropagation (excluding used blocks that are pre-trained). Such an update of the weights of a neural network is *per se* known to the skilled person and is not further described here.

Within the scope of the invention, it could also be contemplated to update other parameters of the neural network HSN such as the number of neurons, or the number of layers in view of minimizing the loss function L.

Further, in view of achieving faster convergence when training the network HSN, the first sub-network HN and the second sub-network SN may be trained independently and, then, the network HSN may be trained as whole.

It is worth noting that, within the scope of the invention, it could also be contemplated embodiments wherein the neural network HSN may be trained using reference videos with temporal annotations (with segment-level labels), or other embodiments wherein the neural network HSN may be trained using reference videos with both temporal and spatial annotations (i.e. anomalies being localised in the anomaly reference videos both temporally and spatially).

**FIG. 4A and 4B** respectively illustrate the architecture of a device and steps of a method for detecting an anomaly in a video according to embodiments of the invention. More particularly, FIG. 4A details the architecture of the first neural sub-network HN used in step S100 for obtaining the first anomaly scores $HS_1$-$HS_T$ while FIG. 4B describes its operation.

As illustrated in FIG. 4B, in an embodiment, step S100 comprises at least one of the following steps S110-S150 implemented by the first neural sub-network HN.

<u>The first neural sub-network HN</u> comprises, as shown in FIG. 4A, at least one of the following elements: a fixed segment generator HSG; a person tracker HPT; a first convolutional neural network HFE; a tracklet relation modeller HRM; and a human-centric anomaly ranker HAR.

The functions of the elements of the first neural sub-network HN are described hereinafter in relation with steps S110-S150 of FIG. 4B.

<u>The fixed segment generator HSG</u> is configured to partition - at step S110 - the video VID into temporal segments $t_1$-$t_T$. In particular, each one of the temporal segments $t_i$ comprises multiple consecutive images (frames) of the video VID. Further, the temporal segments $t_1$-$t_T$ form a partition of the video VID such that: a frame of the video VID is comprised only in one temporal segment $t_i$; and the set of all $t_1$-$t_T$ comprises all the frames of the video VID.

Further, according to an embodiment, the temporal segments $t_1$-$t_T$ have a fixed length (i.e. the same duration, the same number of frames).

<u>The person tracker HPT</u> is configured to detect and track - at step S120 - persons in the video VID. We note hereafter that the detected persons $p_1$-$p_K$.

Accordingly, the person tracker HPT is configured to provide sets of portions of images $k_{1,1}$-$k_{T,K}$ of the temporal segments $t_1$-$t_T$ (i.e. tracklets) respectively associated with the detected persons $p_1$-$p_K$ in the video VID.

Specifically, for each person detected $p_j$, and for each temporal segment $t_i$ of the video VID, a set $k_{i,j}$ of portions of the images $t_i$ of this temporal segment is provided to track the detected person $p_j$ over this temporal segment $t_i$. Such a set of portions of images $k_{i,j}$ tracking a detected person $p_j$ over a temporal segment $t_i$ is commonly referred to as a "tracklet", a terminology we adopt here.

In an embodiment, a set of portions of images $k_{i,j}$ is composed of several bounding boxes (one for each image with the person present) tracking the person over a temporal segment of the video. In other words, according to this embodiment, said portions of the images associated with a detected person are bounding boxes, i.e. rectangles enclosing the person in the frames.

For example, the person tracker HPT may use a pre-trained human detector and tracker network such as the one presented in Zhang et al., "ByteTrack: Multi-Object Tracking by Associating Every Detection Box", 2021.

<u>The first convolutional neural network HFE</u> is configured to provide - at step S130 - feature maps $HF_1$-$HF_K$ respectively associated with the detected persons $p_1$-$p_k$. In particular, the first convolutional neural network HFE allows extracting local spatio-temporal features of the video VID related to the detected persons $p_1$-$P_K$.

Specifically, the first convolutional network HFE takes as input the tracklets $k_{1,1}$-$k_{T,K}$. For each tracklet $k_{i,j}$, the first convolutional network HFE provides a feature vector $X_{i,j}$. Accordingly, the feature map $HF_j$ associated with a detected person $p_j$ is composed of the features vectors $X_{1,j}$-$X_{T,j}$, provided by the convolutional network HFE for the tracklets $k_{1,j}$-$k_{T,j}$ associated with this person $p_j$.

In an embodiment, the first convolutional neural network may include a pre-trained three-dimensional convolutional neural network (commonly and hereinafter abbreviated "3D ConvNet"). For instance, such 3D ConvNets are presented in the following documents: Joao Carreira et al. "Quo Vadis, Action Recognition? A New Model and the Kinetics Dataset", IEEE Conference on Computer Vision and Pattern Recognition, 2017; and Christoph Feichtenhofe, "X3d: Expanding architectures for efficient video recognition", Proceedings of the IEEE Conference on Computer Vision and Pattern Recognition, 2020. Additional layers may be included in the first convolutional network HFE to meet input requirements of a pre-trained 3D ConvNet.

<u>The tracklet relation modeller HRM</u> is configured to select - at step S140 - a predefined number of the feature maps $HF_1$-$HF_K$ whose magnitudes are the largest.

To this end, the tracklet relation modeller HRM may proceed as follows. It computes the magnitude of each one of the feature maps $HF_1$-$HF_K$ respectively associated with the K detected persons For a given feature map $HF_j$ associated to a detected person, the magnitude of feature map $HF_j$ is defined as $\Sigma_i \|X_{i,j}\|_2$, where $\{X_{i,j}\}_i$ are the features vectors of the feature map $HF_j$. The magnitude of a feature map captures the variation of appearance and motion in the spatio-temporal feature space. Then, the tracklet relation modeller HRM ranks the feature maps $HF_1$-$HF_K$ with respect to their magnitudes. It further selects a predefined number, noted $K_s$ hereinafter (e.g. $K_s$ equals 10, or 7), of feature maps $HF_1$-$HF_{Ks}$ whose magnitudes are the largest.

In view of detecting human-centric anomalies, this block allows selecting the feature maps $HF_1$-$HF_{Ks}$ associated with the persons $p_1$-$p_{Ks}$ whose behaviours are the most distinctive (assuming sharp change in the spatio-temporal feature space as distinctive). In addition, it should be noted that the proposed selection allows maintaining a low-complexity implementation for scenarios with a large number of people present in the video.

In addition, the tracklet relation modeller HRM is configured to encode - at step S140 - the selected feature maps $HF_1$-$HF_{Ks}$ into a single encoded feature map HM using a long short-term memory neural network. The feature map HM is composed of a set of feature vectors $X'_{1,1}$-$X'_{T,Ks}$.

It is important to mention that the feature maps $HF_1$-$HF_K$ are inputted in order with respect to their magnitudes. Indeed, the long short-term memory neural network is used to encode the fixed order dependency as a relation modelling among the selected feature maps $HF_1$-$HF_K$.

The proposed encoding allows obtaining discriminative representations for human-centric anomalies in videos such as stealing, shoplifting, or fighting.

The human-centric anomaly ranker HAR is configured to compute - at step S150 - the first anomaly scores $HS_1$-$HS_T$ for the temporal segments $t_1$-$t_T$ of the video VID. We recall that the first anomaly scores $HS_1$-$HS_T$ are representative of the presence of human-centric anomalies in the temporal segments $t_1$-$t_T$.

As illustrated in FIG. 4A, the human-centric anomaly ranker HAR takes as input the feature map HM provided by the relation modeller HRM and assign anomaly scores to each tracklet $k_{1,1}$-$k_{T,K}$ present in the temporal segments $t_1$-$t_T$ of the video VID.

To this end, the human-centric anomaly ranker HAR may proceed as follows. In an embodiment, the anomaly ranker HAR comprises $K_s$ parallel multi-layer perceptrons to independently process each tracklet $k_{i,j}$. Each one the parallel multi-layer perceptrons may include a stack of three fully-connected layers (e.g. with 96, 32, 1 neurones respectively) where the final layer is composed of a single neuron with a sigmoid activation function. The output of the parallel multi-layer perceptrons provides an anomaly score map for each one of tracklet $k_{1,1}$-$k_{T,K}$. Then, a max pooling operator is applied over this score map to obtain one anomaly score $HS_1$-$HS_T$ for each one of the temporal segments $t_1$-$t_T$.

In addition, in an embodiment illustrated in FIG. 4A, the human-centric anomaly ranker HAR is configured to provide, to the coupler CPL, the latent representations $HL_1$-$HL_T$ of the temporal segments $t_1$-$t_T$ of the video VID. For example, the latent representations $HL_1$-$HL_T$ may be the outputs of the fully-connected layers of the multi-layer perceptrons included in the human-centric anomaly ranker HAR.

**FIG. 5A, 5B, and 5C** illustrate the architecture of a device and steps of a method for detecting an anomaly in a video according to embodiments of the invention. In particular, FIG. 5A-5B detail the architecture of the second neural sub-network SN used in step S200 for obtaining the second anomaly scores $SS_1$-$SS_T$ while FIG. 5C describes its operation.

As illustrated in FIG. 5C, in an embodiment, step S200 comprises at least one of the following steps S210-S240 implemented by the second neural sub-network SN.

The second neural sub-network SN comprises, as shown in FIG. 5A, at least one of the following elements: a multi-granularity segment generator SSG; a global feature extractor SFE; a multi-granularity relation modeller SRM; and a scene-centric anomaly ranker SAR.

The functions of the elements of the second neural sub-network SN are described hereinafter in relation with steps S210-S240 of FIG. 5C.

The multi-granularity segment generator SSG is configured to partition - at step S210 - the video VID multiple times respectively into multiple sets of temporal segments $t_1$-$t_T$, $t'_1$-$t'_{2T}$, $t''_1$-$t''_{3T}$. In particular, temporal segments $t_i$, $t'_i$, $t''_i$ of different sets have different lengths (i.e. different durations). Thereby, the video VID is divided into sets of temporal segments of multiple temporal granularities.

More specifically, the different sets of temporal segments have different number of segments. Furthermore, for each set of temporal segments, the segments of the set have a fixed length (i.e. the same duration, the same number of consecutive frames).

It should be emphasized that each set of temporal segments forms in itself a partition of the VID video. For each set of temporal segments, the union of the temporal segments of that set provides the entire video VID.

As illustrated in FIG. 5A, in a particular embodiment, the segment generator SSG is configured to partition (i.e. divide) three times the video VID respectively into three sets of temporal segments: $t_1$-$t_T$; $t'_1$-$t'_{2T}$; and $t''_1$-$t''_{3T}$. For example, the first set $t_1$-$t_T$ may include 32 temporal segments (i.e. low granularity); the second set $t'_1$-$t'_{2T}$ may include 64 temporal segments (i.e. medium granularity); and the third set $t''_1$-$t''_{3T}$ may include 96 temporal segments (i.e. high granularity).

The second convolutional neural network SFE is configured to obtain - at step S220 - feature maps $SF_{1T}$, $SF_{2T}$, $SF_{3T}$ respectively associated with the sets of temporal segments $t_1$-$t_T$, $t'_1$-$t'_{2T}$, $t''_1$-$t''_{3T}$. Specifically, the second convolutional neural network SFE takes as input the entire images (i.e. whole frames) of the different sets of temporal segments and provides at its output the feature maps $SF_{1T}$, $SF_{2T}$, $SF_{3T}$.

Thereby, the second convolutional neural network SFE allows extracting global spatio-temporal features of the video with multiple temporal granularities.

In an embodiment, the second convolutional neural network SFE includes a pre-trained 3D ConvNet as previously described.

The multi-granularity relation modeller SRM is configured to - at step S230 - encode the feature maps $SF_{1T}$, $SF_{2T}$, $SF_{3T}$ into a single encoded feature map SM using a long short-term memory neural network LSTM. The feature map SM is composed of a set of feature vectors $Y_1$-$Y_T$.

It should be noted that the proposed encoding of feature maps $SF_{1T}$, $SF_{2T}$, $SF_{3T}$ (associated with the different temporal granularities) into the encoded feature map SM is performed using a LSTM capable of learning temporal dependencies. Thereby, the proposed encoding allows obtaining a feature map SM representative of both: short length anomalies (e.g. an explosion) characterised by sharp changes in the spatio-temporal features of the video VID; and long length anomalies (e.g. a fire) characterised by progressive changes in the spatio-temporal features of the video VID.

FIG. 5B details the architecture of the multi-granularity relation modeller SRM according to a particular embodiment of the invention. This particular embodiment proposes to proceed as follows for encoding the feature maps $SF_{1T}$, $SF_{2T}$, $SF_{3T}$ associated with different temporal granularities (hence with different dimensions) into the encoded feature map SM.

First, the high-granularity feature map $SF_{3T}$ is inputted into a temporal downscaler TD1, e.g. including two sequential convolutional layers. The temporal downscaler TD1 reduces the dimensions of the high-granularity feature map $SF_{3T}$ so as to match the dimension of the medium-granularity feature map $SF_{2T}$. In parallel, the medium-granularity feature map $SF_{2T}$ is inputted into a bottleneck module BT1, e.g. including a convolutional layer. Then, the outputs of the temporal downscaler TD1 and the bottleneck module BT1 are combined using a concatenation module CT1.

Second, the output of the concatenation module CT1 is inputted into a temporal downscaler TD2 (e.g. including two sequential convolutional layers) so as to match the dimension of the low-granularity feature map $SF_{1T}$. In parallel, the feature map $SF_{1T}$ is inputted into a bottleneck module BT2, e.g. including a convolutional layer.

Third, the outputs of the temporal downscaler TD2 and the bottleneck module BT2 are combined using a concatenation module CT2. Then, the output of the concatenation module CT2 is inputted into the long short-term memory neural network LSTM which provides the encoded feature map SM.

The scene-centric anomaly ranker SAR is configured to compute - at step S240 - the second anomaly scores $SS_1$-$SS_T$ for the temporal segments $t_1$-$t_T$ of the video VID. We recall that the second anomaly scores $HS_1$-$HS_T$ are representative of the presence of anomalous events in the temporal segments $t_1$-$t_T$.

As illustrated in FIG. 5B, the scene-centric anomaly ranker HAR takes as input the encoded feature map SM provided by the multi-granularity relation modeller SRM and assign an anomaly score $SS_1$-$SS_T$ to each one of the temporal segments $t_1$-$t_T$ of the video VID.

To this end, in an embodiment, the scene-centric anomaly ranker SAR comprises a multi-layer perceptron. In particular, this multi-layer perceptron may include a stack of three fully-connected layers (e.g. with 96. 32, 1 neurones respectively) where the final layer is composed of a single neuron with a sigmoid activation function. The multi-layer perceptron provides at its output a respective anomaly score $SS_1$-$SS_T$ for each one of the temporal segments $t_1$-$t_T$.

In addition, in an embodiment illustrated in FIG. 5A, the scene-centric anomaly ranker SAR is configured to provide, to the coupler CPL, the latent representations $SL_1$-$SL_1$ of the temporal segments $t_1$-$t_T$ of the video VID. For example, the latent representations $SL_1$-$SL_T$ may be the outputs of the fully-connected layers of the multi-layer perceptron included in the scene-centric anomaly ranker SAR.

**FIG. 6A and 6B** illustrate the architecture of a surveillance device and steps of a method for detecting an anomaly in a video according to embodiments of the invention. Specifically, these figures details the architecture and the operation of the coupler CPL used in step S300 for obtaining the aggregated anomaly scores $AS_1$-$AS_T$.

As illustrated in FIG. 6B, in an embodiment, step S300 comprises at least one of the following steps S310-S340 implemented by the coupler CPL of the neural network HSN.

As previously mentioned, in an embodiment, the coupler CPL comprises a third neural sub-network SSC (a soft-selection coupler) taking as input the latent representations $HL_1$-$HL_T$, $SL_1$-$SL_1$ and providing the weights $HW_1$-$HW_T$, $SW_1$-$SW_T$ used in the weighted sum at step S300.

Specifically, the latent representations $HL_1$-$HL_T$ of the temporal segments $t_1$-$t_T$ of the video VID are intermediate representations (i.e. output of hidden layers) provided by the human-centric anomaly ranker HAR of the first sub-network HN; and the latent representations $SL_1$-$SL_1$ of $t_1$-$t_T$ of the video VID are intermediate representations (i.e. output of hidden layers) provided by the scene-centric anomaly ranker SAR of the second sub-network SN.

The third neural sub-network SSC comprises in the embodiment illustrated in FIG. 6A: a segment-level selector SLS; a video-level selector VLS; and a final selector FS. The functions of these elements are described in relation with steps S310-S330 of FIG. 6B.

In an embodiment shown in FIG. 6A, the soft-selection coupler SSC comprises a max-pooling operator MP. In this case, the latent representations $HL_1$-$HL_T$ are inputted into the max-pooling operator MP so as to match the dimension of the latent representations $SL_1$-$SL_T$. The output of max-pooling operator MP is denoted by $HL'_1$-$HL_T'$.

The segment-level selector SLS is configured to compute - at step S310 - segments levels $HTW_1$-$HTW_T$ and $STW_1$-$STW_T$ associated with the temporal segments $t_1$-$t_T$. For each temporal segment $t_i$, two segment-level weights $HTW_i$ and $STW_i$ are computed.

In a particular embodiment, the segment-level selector SLS is implemented as follows. The latent representations $HL'_i$ and $SL_i$ are respectively inputted into two parallel fully-connected layers followed by rectified linear unit (ReLU) activation functions to obtain intermediate representations. The obtained intermediate representations are concatenated. Then, the result of the concatenation is inputted into two parallel fully-connected layers respectively followed by sigmoid activation functions, each one having a unit for computing one of the segment-level weights $HTW_i$ and $STW_i$.

The video-level selector VLS is configured to compute - at step S320 - two video-level weights HVW and SVW associated with the video VID (i.e. unique for all the temporal segments $t_1$-$t_T$ of the video VID).

In a particular embodiment, the video-level selector VLS is implemented as follows. The latent representations $HL'_1$-$HL_T'$ and $SL_1$-$SL_1$ are respectively inputted into two parallel average-pooling operators. These operators respectively average the representations $HL'_1$-$HL_T'$ and $SL_1$-$SL_1$ over the temporal segments $t_1$-$t_T$ of the video VID. The averaged representations are concatenated. Then, the result of the concatenation is inputted into two parallel fully-connected layers respectively followed by sigmoid activation functions, each one having a unit for computing one of the video-level weights HVW and SVW.

The final selector FS is configured to compute - at step S330 - for each temporal segment $t_i$, the two weights $HW_i$ and $SW_i$ based on: the two segment-level weights $HTW_i$ and $STW_i$ (associated with this temporal segment); and the two video-level weights HVW and SVW.

In an embodiment, for each temporal segment $t_i$, the weight $HW_i$ is the product of the segment-level weight $HTW_i$ and the video-level weight HVW; and the weight $SW_i$ is the product of the segment-level weight $STW_i$ and the video-level weight SVW.

It should be emphasized that, by using segment-level weights $HTW_i$, $STW_i$ and video-level weights HVW, SVW, the coupling of the first and second anomaly scores $HS_i$, $SS_i$ is adapted as a function of both the considered temporal segment $t_i$ and the general context of the video.

The coupler CPL is configured to compute - at step S340 - for each temporal segment $t_i$, an aggregated anomaly score $AS_i$ as the sum of: the first anomaly score $HS_i$ multiplied by the weight $HW_i$ (both associated with this temporal segment); and the second anomaly score $SS_i$ multiplied by the weight $SW_i$ (both associated with this temporal segment).

The proposed coupler CPL allows adapting dynamically the coupling of the first sub-network (dedicated to human-centric anomaly detection) and the second sub-network (dedicated to scene-centric anomaly detection). Thereby, the proposed coupler CPL contributes to improving the reliability of detecting both human-centric and scene-centric anomalies.

**Claims**

1. A computer-implemented method for detecting at least one anomaly in a video (VID) of a scene using a neural network (HSN), the neural network (HSN) comprising a first neural sub-network (HN), a second neural sub-network (SN), and a coupler (CPL), the method comprising:

   - a step of obtaining (S100), using the first neural sub-network (HN), first anomaly scores ($HS_1$-$HS_T$) for a plurality of temporal segments ($t_1$-$t_T$) of the video (VID), the first anomaly scores ($HS_1$-$HS_T$) being representative of anomalous human activities, the first sub-neural network (HN) using portions of images ($k_{1,1}$-$k_{T,K}$) of the video (VID) associated with persons ($p_1$-$p_K$) detected in the video (VID) and outputting the first anomaly scores ($HS_1$-$HS_T$);
   - a step of obtaining (S200), using the second neural sub-network (SN), second anomaly scores ($SS_1$-$SS_T$) for the temporal segments ($t_1$-$t_T$), the second anomaly scores ($SS_1$-$SS_T$) being representative of anomalous events in the scene, the second sub-neural network (SN) using entire images of the video (VID) and outputting the second anomaly scores ($SS_1$-$SS_T$); and
   - a step of obtaining (S300), using the coupler (CPL), aggregated anomaly scores ($AS_1$-$AS_T$) for the temporal segments ($t_1$-$t_T$) based on a weighted sum of the first and second anomaly scores ($HS_1$-$HS_T$, $SS_1$-$SS_T$).

2. The method of claim 1, wherein the first anomaly scores ($HS_1$-$HS_T$) are obtained (S100) using a first convolutional neural network (HFE), comprised in the first neural sub-network (HN), taking as input one or more sets of portions of images ($k_{1,1}$-$k_{T,K}$) of the temporal segments ($t_1$-$t_T$), said one or more sets of portions of images ($k_{1,1}$-$k_{T,K}$) being respectively associated with persons ($p_1$-$p_K$) detected (S120) in the video (VID).

3. The method of claim 2, comprising a step of determining (S140) magnitudes of feature maps ($HF_1$-$HF_K$) provided (S130) by the first convolutional neural network (HFE) and respectively associated with the detected persons ($p_1$-$p_K$), and wherein the first anomaly scores ($HS_1$-$HS_K$) are obtained (S150) using a predefined number of these feature maps ($HF_1$-$HF_{Ks}$) whose magnitudes are the largest.

4. The method of any of claims 1 to 3, wherein the coupler (CPL) comprises a third neural sub-network (SSC), and weights ($HW_1$-$HW_T$, $SW_1$-$SW_T$) of the weighted sum are obtained (S330) using the third neural sub-network (SSC) taking as input latent representations ($HL_1$-$HL_T$, $SL_1$-$SL_T$) of the video (VID).

5. The method of claim 4, wherein for one of the temporal segments ($t_i$), the weights ($HW_i$, $SW_i$) of the weighted sum are obtained (S330) based on:

> - segment-level weights ($HTW_i$, $STW_i$) obtained (S310) using the third neural sub-network (SSC) and associated with this temporal segment ($t_i$); and
> - video-level weights (HVW, SVW) obtained (S320) using the third neural sub-network (SSC) and associated with the video (VID).

6. The method of any of claims 1 to 5, comprising:

> - a step of partitioning (S210) the video (VID) into the temporal segments ($t_1$-$t_T$); and
> - at least one another step of partitioning (S210) the video (VID) into other temporal segments ($t'_1$-$t'_{2T}$, $t''_1$-$t''_{3T}$), the temporal segments ($t_1$-$t_T$) and the other temporal segments ($t'_1$-$t'_{2T}$, $t''_1$-$t''_{3T}$) having different lengths,

wherein the second anomaly scores ($SS_1$-$SS_T$) are obtained (S200) using a second convolutional neural network (SFE), comprised in the second neural sub-network (SN), taking as input the entire images of the temporal segments ($t_1$-$t_T$) and the other temporal segments ($t'_1$-$t'_{2T}$, $t''_1$-$t''_{3T}$).

7. The method of claim 6, comprising a step of encoding (S230) feature maps ($SF_{1T}$, $SF_{2T}$, $SF_{3T}$) provided (S220) by the second convolutional neural network (SFE) for the temporal segments ($t_1$-$t_T$) and the other temporal segments ($t'_1$-$t'_{2T}$, $t''_1$-$t''_{3T}$) into an encoded feature map (SM) using a long short-term memory neural network (LSTM), and wherein the second anomaly scores ($SS_1$-$SS_T$) are obtained (S240) using the encoded feature map (SM).

8. The method of any of claims 1 to 7, comprising for one of the temporal segments ($t_i$) of the video (VID), a step of detecting (S400) an anomaly in this temporal segment ($t_i$) if the respective aggregated anomaly score ($AS_i$) for this temporal segment ($t_i$) exceeds a threshold.

9. A computer-implemented method for training a neural network (HSN) for detecting at least one anomaly in a video (VID), the neural network (HSN) comprising a first neural sub-network (HN), a second neural sub-network (SN), and a coupler (CPL), the method comprising:

> - a step of obtaining (T200) anomaly scores (AS_N, AS_A) for temporal segments of reference videos (RV_N, RV_A) using the method of any of claims 1 to 8, the reference videos (RV_N, RV_A) being labelled with video-level labels and including normal videos (RV_N) and anomaly videos (RV_A);
> - a step of evaluating (T300) a loss function (L) using the obtained anomaly scores (AS_N) for the normal reference videos (RV_N) and the obtained anomaly scores (AS_A) for the anomaly reference videos (RV_A); and
> - a step of updating (T400) parameters of the neural network (HSN) to minimize the loss function (L).

10. The method of claim 9, wherein the loss function (L) is based on a weighted sum of:

> - a first function (LC) comprising a sum of the anomaly scores (AS_N) obtained for the normal reference videos (RV_N) minus a sum of the anomaly scores (AS_A) obtained for the anomaly reference videos (RV_A); and
> - a second function (LI) comprising a difference between an error associated with the anomaly scores (AS_A) obtained for the anomaly reference videos (RV_A) and an error associated with the anomaly scores (AS_N) obtained for the normal reference videos (RV_N).

11. The method of claim 10, wherein the loss function (L) is evaluated using:

$$L(\boldsymbol{D_n}, \boldsymbol{D_a}) = \lambda_1 \cdot L_{\text{ctx}}(\boldsymbol{D_n}, \boldsymbol{D_a}) + \lambda_2 \cdot L_{\text{ins}}(\boldsymbol{D_n}, \boldsymbol{D_a}),$$

$$L_{\text{ctx}}(\boldsymbol{D_n}, \boldsymbol{D_a}) = \max\left(0, 1 - \sum_{i=1}^{T} D_a^i + \sum_{i=1}^{T} D_n^i\right), \text{ and } L_{\text{ins}}(\boldsymbol{D_n}, \boldsymbol{D_a}) = \left\|E_{D_a} - E_{D_n}\right\|,$$

where: $L_{\text{ctx}}$ and $L_{\text{ins}}$ denote said first and second functions (LC, LI); $\lambda_1$ and $\lambda_2$ are positive real coefficients; $T$ is a number of temporal segments; $\boldsymbol{D_n} = \{D_n^i\}_{1 \le i \le T}$ and $\boldsymbol{D_a} = \{D_a^i\}_{1 \le i \le T}$ are the anomaly scores (AS_N, AS_A) respectively obtained for the temporal segments of the normal reference videos (RV_N) and the anomaly reference videos (RV_A); and $E_{Da}$ and $E_{Dn}$ are expressed by:

$$E_{Da} = \frac{1}{T}\sum_{i=1}^{T}\left(D_a^i - P_a^i\right)^2 \text{, with } P_a^i = \begin{cases} 0, \text{ if } D_a^i \leq D_{\text{ref}} \\ 1, \text{ if } D_a^i > D_{\text{ref}} \end{cases},$$

$$E_{Dn} = \frac{1}{T}\sum_{i=1}^{T}\left(D_n^i - P_n^i\right)^2 \text{, with } P_n^i = 0,$$

with

$$D_{\text{ref}} = \left(\max_{i}\left(D_a^i\right) + \min_{i}\left(D_a^i\right)\right)/2.$$

**12.** A neural network (HSN) for detecting at least one anomaly in a video (VID) of a scene, the neural network (HSN) comprising:

- a first neural sub-network (HN) configured to obtain (S100) first anomaly scores ($HS_1$-$HS_T$) for a plurality of temporal segments ($t_1$-$t_T$) of the video (VID), the first anomaly scores ($HS_1$-$HS_T$) being representative of anomalous human activities, the first sub-neural network (HN) using portions of images ($k_{1,1}$-$k_{T,K}$) of the video (VID) associated with persons ($p_1$-$p_K$) detected in the video (VID) and outputting the first anomaly scores ($HS_1$-$HS_T$);
- a second neural sub-network (SN) configured to obtain (S200) second anomaly scores ($SS_1$-$SS_T$) for the temporal segments ($t_1$-$t_T$) the second anomaly scores ($SS_1$-$SS_T$) being representative of anomalous events in the scene, the second sub-neural network (SN) using entire images of the video (VID) and outputting the second anomaly scores ($SS_1$-$SS_T$); and
- a coupler (CPL) configured to obtain (S300) aggregated anomaly scores ($AS_1$-$AS_T$) for the temporal segments ($t_1$-$t_T$) based on a weighted sum of the first and second anomaly scores ($HS_1$-$HS_T$, $SS_1$-$SS_T$).

**13.** A device (APP) for detecting at least one anomaly in a video (VID), the device (APP) comprising a neural network (HSN) according to claim 12.

**14.** A surveillance system (SYS) comprising: a camera (CAM) for obtaining a video (VID); and a device (APP) according to claim 13 for detecting at least one anomaly in the video (VID).

**15.** A computer program (PROG) comprising instructions which, when the program (PROG) is executed by at least one processor (PROC), cause said at least one processor (PROC) to implement the method according to any of claims 1 to 11.


**Patentansprüche**

**1.** Computerimplementiertes Verfahren zum Erkennen mindestens einer Anomalie in einem Video (VID) einer Szene unter Verwendung eines neuronalen Netzes (HSN), das neuronale Netz (HSN) umfassend ein erstes neuronales Subnetz (HN), ein zweites neuronales Subnetz (SN) und einen Koppler (CPL), das Verfahren umfassend:

- einen Schritt eines Erlangens (S100), unter Verwendung des ersten neuronalen Subnetzes (HN), von ersten Anomaliebewertungen ($HS_1$-$HS_T$) für eine Vielzahl von temporären Segmenten ($t_1$-$t_T$) des Videos (VID), wobei die ersten Anomaliebewertungen ($HS_1$-$HS_T$) repräsentativ für anomale menschliche Aktivitäten sind, das erste subneuronale Netz (HN) Abschnitte von Bildern ($k_{1,1}$-$k_{T,K}$) des Videos (VID) verwendet, die mit Personen ($p_1$-$p_K$) assoziiert sind, die in dem Video (VID) detektiert werden, und die ersten Anomaliebewertungen ($HS_1$-$HS_T$) ausgibt;
- einen Schritt eines Erlangens (S200), unter Verwendung des zweiten neuronalen Subnetzes (SN), von zweiten Anomaliebewertungen ($SS_1$-$SS_T$) für die temporären Segmente ($t_1$-$t_T$), wobei die zweiten Anomaliebewertungen

($SS_1$-$SS_T$) repräsentativ für anomale Ereignisse in der Szene sind, wobei das zweite subneuronale Netz (SN) ganze Bilder des Videos (VID) verwendet und die zweiten Anomaliebewertungen ($SS_1$-$SS_T$) ausgibt; und
- einen Schritt eines Erlangens (S300), unter Verwendung des Kopplers (CPL), von aggregierten Anomaliewerten ($AS_1$-$AS_T$) für die temporären Segmente ($t_1$-$t_T$) basierend auf einer gewichteten Summe der ersten und der zweiten Anomaliebewertungen ($HS_1$-$HS_T$, $SS_1$-$SS_T$).

2. Verfahren nach Anspruch 1, wobei die ersten Anomaliebewertungen ($HS_1$-$HS_T$) unter Verwendung eines ersten neuronales Faltungsnetzes (HFE), das in dem ersten neuronalen Subnetz (HN) enthalten ist, erlangt werden (S100), wobei als Eingang ein oder mehrere Sätze von Bildabschnitten ($k_{1,1}$-$k_{T,K}$) der temporären Segmente ($t_1$-$t_T$) verwendet werden, wobei der eine oder die mehreren Sätze von Bildabschnitten ($k_{1,1}$-$k_{T,K}$) jeweils mit Personen ($p_1$-$p_K$) assoziiert sind, die in dem Video (VID) erfasst (S120) werden.

3. Verfahren nach Anspruch 2, umfassend einen Schritt eines Bestimmens (S140) von Größen von Merkmalskarten ($HF_1$-$HF_K$), die von dem ersten neuronalen Faltungsnetz (HFE) bereitgestellt (S130) und jeweils mit den erfassten Personen ($p_1$-$p_K$) assoziiert werden, und wobei die ersten Anomaliebewertungen ($HS_1$-$HS_T$) unter Verwendung einer vordefinierten Anzahl dieser Merkmalskarten ($HF_1$-$HF_{Ks}$), deren Größen am größten sind, erlangt werden (S150).

4. Verfahren nach einem der Ansprüche 1 bis 3, wobei der Koppler (CPL) ein drittes neuronales Subnetz (SSC) umfasst und die Gewichte ($HW_1$-$HW_T$, $SW_1$-$SW_T$) der gewichteten Summe unter Verwendung des dritten neuronalen Subnetzes (SSC) erlangt werden (S330), wobei als Eingang latente Darstellungen ($HL_1$-$HL_T$, $SL_1$-$SL_T$) des Videos (VID) verwendet werden.

5. Verfahren nach Anspruch 4, wobei für eines der temporären Segmente ($t_i$) die Gewichte ($HW_i$, $SW_i$) der gewichteten Summe basierend auf Folgendem erlangt werden (S330):

   - Gewichte auf Segmentebene ($HTW_i$, $STW_i$), die unter Verwendung des dritten neuronalen Subnetzes (SSC) erlangt werden (S310) und mit diesem temporären Segment ($t_i$) assoziiert sind; und
   - Gewichte auf Videoebene (HVW, SVW), die unter Verwendung des dritten neuronalen Subnetzes (SSC) erlangt (S320) und mit dem Video (VID) assoziiert werden.

6. Verfahren nach einem der Ansprüche 1 bis 5, umfassend:

   - einen Schritt des Aufteilens (S210) des Videos (VID) in die temporären Segmente ($t_1$-$t_T$); und
   - mindestens einen weiteren Schritt eines Aufteilens (S210) des Videos (VID) in weitere temporäre Segmente ($t'_1$-$t'_{2T}$, $t''_1$-$t''_{3T}$), wobei die temporären Segmente ($t_1$-$t_T$) und die weiteren temporären Segmente ($t'_1$-$t'_{2T}$, $t''_1$-$t''_{3T}$) unterschiedliche Längen aufweisen,

   wobei die zweiten Anomaliebewertungen ($SS_1$-$SS_T$) unter Verwendung eines zweiten neuronalen Faltungsnetzs (SFE), das in dem zweiten neuronalen Subnetz (SN) enthalten ist, erlangt werden (S200), wobei als Eingang die gesamten Bilder der temporären Segmente ($t_1$-$t_T$) und der anderen temporären Segmente ($t'_1$-$t'_{2T}$, $t''_1$-$t''_{3T}$) verwendet werden.

7. Verfahren nach Anspruch 6, umfassend einen Schritt eines Kodierens (S230) von Merkmalskarten ($SF_{1T}$, $SF_{2T}$, $SF_{3T}$), die von dem zweiten neuronalen Faltungsnetz (SFE) für die temporären Segmente ($t_1$-$t_T$) und die anderen temporären Segmente ($t'_1$-$t'_{2T}$, $t''_1$-$t''_{3T}$) bereitgestellt werden, in eine kodierte Merkmalskarte (SM) unter Verwendung eines neuronalen Netzes mit langem Kurzzeitgedächtnis (LSTM), und wobei die zweiten Anomaliebewertungen ($SS_1$-$SS_T$) unter Verwendung der kodierten Merkmalskarte (SM) erlangt werden (S240).

8. Verfahren nach einem der Ansprüche 1 bis 7, umfassend für eines der temporären Segmente ($t_i$) des Videos (VID) einen Schritt eines Erkennens (S400) einer Anomalie in diesem temporären Segment ($t_i$), wenn die jeweilige aggregierte Anomaliebewertung ($AS_i$) für dieses temporäre Segment ($t_i$) einen Schwellenwert überschreitet.

9. Computerimplementiertes Verfahren zum Trainieren eines neuronalen Netzes (HSN) zum Erkennen mindestens einer Anomalie in einem Video (VID), wobei das neuronale Netz (HSN) ein erstes neuronales Subnetz (HN), ein zweites neuronales Subnetz (SN) und einen Koppler (CPL) umfasst, das Verfahren umfassend:

   - einen Schritt eines Erlangens (T200) von Anomaliebewertungen (AS_N, AS_A) für temporäre Segmente von Referenzvideos (RV_N, RV_A) unter Verwendung des Verfahrens nach einem der Ansprüche 1 bis 8, wobei die Referenzvideos (RV_N, RV_A) mit Etiketten auf Videoebene markiert sind und normale Videos (RV_N) und Anomalie-Videos (RV_A) beinhalten;

- einen Schritt eines Auswertens (T300) einer Verlustfunktion (L) unter Verwendung der erlangten Anomaliebewertungen (AS_N) für die normalen Referenzvideos (RV_N) und der erlangten Anomaliebewertungen (AS_A) für die Anomalie-Referenzvideos (RV_A); und

- einen Schritt eines Aktualisierens (T400) von Parametern des neuronalen Netzes (HSN) zum Minimieren der Verlustfunktion (L).

**10.** Verfahren nach Anspruch 9, wobei die Verlustfunktion (L) auf einer gewichteten Summe von Folgendem basiert:

- einer ersten Funktion (LC), umfassend eine Summe der für die normalen Referenzvideos (RV_N) erlangten Anomaliebewertungen (AS_N) minus einer Summe der für die Anomalie-Referenzvideos (RV_A) erlangten Anomaliebewertungen (AS_A); und

- einer zweiten Funktion (LI), umfasend eine Differenz zwischen einem Fehler, der mit den für die Anomalie-Referenzvideos (RV_A) erlangten Anomaliebewertungen (AS_A) assoziiert ist, und einem Fehler, der mit den für die normalen Referenzvideos (RV_N) erlangten Anomaliebewertungen (AS_N) assoziiert ist.

**11.** Verfahren nach Anspruch 10, wobei die Verlustfunktion (L) unter Verwendung von Folgendem ausgewertet wird:

$$L(D_n, D_a) = \lambda_1 \cdot L_{\text{ctx}}(D_n, D_a) + \lambda_2 \cdot L_{\text{ins}}(D_n, D_a),$$

$$L_{\text{ctx}}(D_n, D_a) = \max\left(0, 1 - \sum_{i=1}^{T} D_a^i + \sum_{i=1}^{T} D_n^i\right) \text{ und } L_{\text{ins}}(D_n, D_a) = \left\|E_{D_a} - E_{D_n}\right\|,$$

wobei: $L_{\text{ctx}}$ und $L_{\text{ins}}$ die erste und die zweite Funktion (LC, LI) bezeichnen; $\lambda_1$ und $\lambda_2$ positive reelle Koeffizienten sind; $T$ die Anzahl der temporären Segmente ist; $Dn = \{D_n^i\}_{1 \leq i \leq T}$ und $Da = \{D_a^i\}_{1 \leq i \leq T}$ die Anomaliebewertungen (AS_N, AS_A) sind, die jeweils für die temporären Segmente der normalen Referenzvideos (RV_N) und der anomalen Referenzvideos (RV_A) erlangt werden; und $E_{Da}$ und $E_{Dn}$ ausgedrückt sind durch:

$$E_{D_a} = \frac{1}{T}\sum_{i=1}^{T}\left(D_a^i - P_a^i\right)^2, \text{ mit } P_a^i = \begin{cases} 0, \text{ if } D_a^i \leq D_{\text{ref}} \\ 1, \text{ if } D_a^i > D_{\text{ref}} \end{cases},$$

$$E_{D_n} = \frac{1}{T}\sum_{i=1}^{T}\left(D_n^i - P_n^i\right)^2, \text{ mit } P_n^i = 0,$$

mit

$$D_{\text{ref}} = \left(\max_i\left(D_a^i\right) + \min_i\left(D_a^i\right)\right)/2.$$

**12.** Neuronales Netz (HSN) zum Erkennen von mindestens einer Anomalie in einem Video (VID) einer Szene, das neuronale Netz (HSN) umfassend:

- ein erstes neuronales Sub-Netz (HN), das konfiguriert ist, um erste Anomaliebewertungen (HS_1-HS_T) für eine Vielzahl von temporären Segmenten (t_1-t_T) des Videos (VID) zu erlangen (S100), wobei die ersten Anomalie-bewertungen (HS_1-HS_T) repräsentativ für anomale menschliche Aktivitäten sind, das erste subneuronale Netz (HN) Abschnitte von Bildern (k_{1,1}-k_{T,K}) des Videos (VID) verwendet, die mit Personen (p_1-p_K) assoziiert sind, die in dem Video (VID) detektiert werden, und die ersten Anomaliebewertungen (HS_1-HS_T) ausgibt;

- ein zweites neuronales Sub-Netz (SN), das konfiguriert ist, um zweite Anomaliebewertungen (SS_1-SS_T) für die temporären Segmente (t_1-t_T) zu erlangen (S200), wobei die zweiten Anomaliebewertungen (SS_1-SS_T) reprä-

sentativ für anomale Ereignisse in der Szene sind, wobei das zweite subneuronale Netz (SN) ganze Bilder des Videos (VID) verwendet und die zweiten Anomaliebewertungen (SS$_1$-SS$_T$) ausgibt; und
- einen Koppler (CPL), der konfiguriert ist, um (S300) aggregierte Anomaliebewertungen (AS$_1$-AS$_T$) für die temporären Segmente (t$_1$-t$_T$) basierend auf einer gewichteten Summe der ersten und der zweiten Anomaliebewertungen (HS$_1$-HS$_T$, SS$_1$-SS$_T$) zu erlangen.

13. Vorrichtung (APP) zum Erkennen mindestens einer Anomalie in einem Video (VID), die Vorrichtung (APP) umfassend ein neuronales Netz (HSN) nach Anspruch 12.

14. Überwachungssystem (SYS), umfassend: eine Kamera (CAM) zum Erlangen eines Videos (VID); und eine Vorrichtung (APP) nach Anspruch 13 zum Erkennen mindestens einer Anomalie in dem Video (VID).

15. Computerprogramm (PROG), umfassend Anweisungen, die, wenn das Programm (PROG) von mindestens einem Prozessor (PROC) ausgeführt wird, den mindestens einen Prozessor (PROC) veranlassen, das Verfahren nach einem der Ansprüche 1 bis 11 zu implementieren.


**Revendications**

1. Procédé mis en œuvre par ordinateur pour détecter au moins une anomalie dans une vidéo (VID) d'une scène à l'aide d'un réseau de neurones (HSN), le réseau de neurones (HSN) comprenant un premier sous-réseau de neurones (HN), un deuxième sous-réseau de neurones (SN) et un coupleur (CPL), le procédé comprenant :

   - une étape consistant à obtenir (S100), à l'aide du premier sous-réseau de neurones (HN), des premiers scores d'anomalie (HS$_1$-HS$_T$) pour une pluralité de segments temporels (t$_1$-t$_T$) de la vidéo (VID), les premiers scores d'anomalie (HS$_1$-HS$_T$) étant représentatifs d'activités humaines anormales, le premier réseau de neurones (HN) utilisant des parties d'images (k$_{1,1}$-k$_{T,K}$) de la vidéo (VID) associées à des personnes (p$_1$-p$_K$) détectées dans la vidéo (VID) et fournissant en sortie les premiers scores d'anomalie (HS$_1$-HS$_T$) ;
   - une étape consistant à obtenir (S200), à l'aide du deuxième sous-réseau de neurones (SN), des deuxièmes scores d'anomalie (SS$_1$-SS$_T$) pour les segments temporels (t$_1$-t$_T$), les deuxièmes scores d'anomalie (SS$_1$-SS$_T$) étant représentatifs d'événements anormaux dans la scène, le deuxième sous-réseau de neurones (SN) utilisant des images entières de la vidéo (VID) et fournissant en sortie les deuxièmes scores d'anomalie (SS$_1$-SS$_T$) ; et
   - une étape consistant à obtenir (S300), à l'aide du coupleur (CPL), des scores d'anomalie agrégés (AS$_1$-AS$_T$) pour les segments temporels (t$_1$-t$_T$) sur la base d'une somme pondérée des premiers et deuxièmes scores d'anomalie (HS$_1$-HS$_T$, SS$_1$-SS$_T$).

2. Procédé selon la revendication 1, dans lequel les premiers scores d'anomalie (HS$_1$-HS$_T$) sont obtenus (S100) à l'aide d'un premier réseau de neurones convolutif (HFE), compris dans le premier sous-réseau de neurones (HN), en prenant comme entrée un ou plusieurs ensembles de parties d'images (k$_{1,1}$-k$_{T,K}$) des segments temporels (t$_1$-t$_T$), ledit un ou lesdits plusieurs ensembles de parties d'images (k$_{1,1}$-k$_{T,K}$) étant respectivement associés à des personnes (p$_1$-p$_K$) détectées (S120) dans la vidéo (VID).

3. Procédé selon la revendication 2, comprenant une étape consistant à déterminer (S140) des amplitudes de cartes de caractéristiques (HF$_1$-HF$_K$) fournies (S130) par le premier réseau de neurones convolutif (HFE) et respectivement associées aux personnes détectées (p$_1$-p$_K$), et dans lequel les premiers scores d'anomalie (HS$_1$-HS$_K$) sont obtenus (S150) en utilisant un nombre prédéfini de ces cartes de caractéristiques (HF$_1$-HF$_{Ks}$) dont les amplitudes sont les plus grandes.

4. Procédé selon l'une quelconque des revendications 1 à 3, dans lequel le coupleur (CPL) comprend un troisième sous-réseau de neurones (SSC), et des poids (HW$_1$-HW$_T$, SW$_1$-SW$_T$) de la somme pondérée sont obtenus (S330) à l'aide du troisième sous-réseau de neurones (SSC) en prenant comme entrée des représentations latentes (HL$_1$-HL$_T$, SL$_1$-SL$_T$) de la vidéo (VID).

5. Procédé selon la revendication 4, dans lequel, pour l'un des segments temporels (t$_i$), les poids (HW$_i$, SW$_i$) de la somme pondérée sont obtenus (S330) sur la base :

   - de poids au niveau du segment (HTW$_i$, STW$_i$) obtenus (S310) à l'aide du troisième réseau de neurones (SSC) et associés à ce segment temporel (t$_i$) ; et

- de poids au niveau de la vidéo (HVW, SVW) obtenus (S320) à l'aide du troisième réseau de neurones (SSC) et associés à la vidéo (VID).

6.  Procédé selon l'une quelconque des revendications 1 à 5, comprenant :

    - une étape consistant à partitionner (S210) la vidéo (VID) en segments temporels ($t_1$-$t_T$) ; et
    - au moins une autre étape consistant à partitionner (S210) la vidéo (VID) en d'autres segments temporels ($t'_1$-$t'_{2T}$, $t''_1$-$t''_{3T}$), les segments temporels ($t_1$-$t_T$) et les autres segments temporels ($t'_1$-$t'_{2T}$, $t'_1$-$t''_{3T}$) ayant des longueurs différentes,

    dans lequel les deuxièmes scores d'anomalie ($SS_1$-$SS_T$) sont obtenus (S200) à l'aide d'un deuxième réseau de neurones convolutif (SFE), compris dans le deuxième sous-réseau de neurones (SN), en prenant comme entrée les images entières des segments temporels ($t_i$-$t_T$) et des autres segments temporels ($t'_1$-$t'_{2T}$, $t''_1$-$t''_{3T}$).

7.  Procédé selon la revendication 6, comprenant une étape consistant à coder (S230) des cartes de caractéristiques ($SF_{1T}$, $SF_{2T}$, $SF_{3T}$) fournies (S220) par le deuxième réseau de neurones convolutif (SFE) pour les segments temporels ($t'_1$-$t_T$) et les autres segments temporels ($t'_1$-$t'_{2T}$, $t''_1$-$t''_{3T}$) en une carte de caractéristiques codée (SM) à l'aide d'un réseau de neurones à mémoire à court et long terme (LSTM), et dans lequel les deuxièmes scores d'anomalie ($SS_1$-$SS_T$) sont obtenus (S240) à l'aide de la carte de caractéristiques codée (SM).

8.  Procédé selon l'une quelconque des revendications 1 à 7, comprenant, pour l'un des segments temporels ($t_i$) de la vidéo (VID), une étape consistant à détecter (S400) une anomalie dans ce segment temporel ($t_i$) si le score d'anomalie agrégé respectif ($AS_i$) pour ce segment temporel ($t_i$) dépasse un seuil.

9.  Procédé mis en œuvre par ordinateur pour entraîner un réseau de neurones (HSN) à détecter au moins une anomalie dans une vidéo (VID), le réseau de neurones (HSN) comprenant un premier sous-réseau de neurones (HN), un deuxième sous-réseau de neurones (SN) et un coupleur (CPL), le procédé comprenant :

    - une étape consistant à obtenir (T200) des scores d'anomalie (AS_N, AS_A) pour des segments temporels de vidéos de référence (RV_N, RV_A) à l'aide du procédé selon l'une quelconque des revendications 1 à 8, les vidéos de référence (RV_N, RV_A) étant étiquetées avec des étiquettes au niveau de la vidéo, et comprenant des vidéos normales (RV_N) et des vidéos d'anomalies (RV_A) ;
    - une étape consistant à évaluer (T300) une fonction de perte (L) à l'aide des scores d'anomalie obtenus (AS_N) pour les vidéos de référence normales (RV_N) et des scores d'anomalie obtenus (AS_A) pour les vidéos de référence d'anomalies (RV_A) ; et
    - une étape consistant à mettre à jour (T400) des paramètres du réseau de neurones (HSN) afin de minimiser la fonction de perte (L).

10. Procédé selon la revendication 9, dans lequel la fonction de perte (L) est basée sur une somme pondérée de :

    - une première fonction (LC) comprenant une somme des scores d'anomalie (AS_N) obtenus pour les vidéos de référence normales (RV_N) moins une somme des scores d'anomalie (AS_A) obtenus pour les vidéos de référence d'anomalies (RV_A) ; et
    - une deuxième fonction (LI) comprenant une différence entre une erreur associée aux scores d'anomalie (AS_A) obtenus pour les vidéos de référence d'anomalies (RV_A) et une erreur associée aux scores d'anomalie (AS_N) obtenus pour les vidéos de référence normales (RV_N).

11. Procédé selon la revendication 10, dans lequel la fonction de perte (L) est évaluée à l'aide de la formule :

$$L(\boldsymbol{D_n}, \boldsymbol{D_a}) = \lambda_1 \cdot L_{\text{ctx}}(\boldsymbol{D_n}, \boldsymbol{D_a}) + \lambda_2 \cdot L_{\text{ins}}(\boldsymbol{D_n}, \boldsymbol{D_a})_,$$

$$L_{\text{ctx}}(\boldsymbol{D_n}, \boldsymbol{D_a}) = \max\left(0, 1 - \sum_{i=1}^{T} D_a^i + \sum_{i=1}^{T} D_n^i\right)_, \text{ et } L_{\text{ins}}(\boldsymbol{D_n}, \boldsymbol{D_a}) = \left\|E_{D_a} - E_{D_n}\right\|_,$$

où : $L_{\text{ctx}}$ et $L_{\text{ins}}$ désignent lesdites première et deuxième fonctions (LC, LI) ; $\lambda_1$ et $\lambda_2$ sont des coefficients réels positifs ;

$T$ est un nombre de segments temporels ; $\boldsymbol{D_n} = \left\{D_n^i\right\}_{1 \leq i \leq T}$ et $\boldsymbol{D_a} = \left\{D_a^i\right\}_{1 \leq i \leq T}$ sont les scores d'anomalie (AS_N, AS_A) obtenus respectivement pour les segments temporels des vidéos de référence normales (RV_N) et des vidéos de référence d'anomalies (RV_A) ; et $E_{Da}$ et $E_{Dn}$ sont exprimés par :

$$E_{D_a} = \frac{1}{T}\sum_{i=1}^{T}\left(D_a^i - P_a^i\right)^2 \text{, avec } P_a^i = \begin{cases} 0, \text{ if } D_a^i \leq D_{\text{ref}} \\ 1, \text{ if } D_a^i > D_{\text{ref}} \end{cases},$$

$$E_{D_n} = \frac{1}{T}\sum_{i=1}^{T}\left(D_n^i - P_n^i\right)^2 \text{, avec } P_n^i = 0,$$

avec

$$D_{\text{ref}} = \left(\max_i\left(D_a^i\right) + \min_i\left(D_a^i\right)\right)/2.$$

12. Réseau de neurones (HSN) destiné à détecter au moins une anomalie dans une vidéo (VID) d'une scène, le réseau de neurones (HSN) comprenant:

   - un premier sous-réseau de neurones (HN) configuré pour obtenir (S100) des premiers scores d'anomalie ($HS_1$-$HS_T$) pour une pluralité de segments temporels ($t_1$-$t_T$) de la vidéo (VID), les premiers scores d'anomalie ($HS_1$-$HS_T$) étant représentatifs d'activités humaines anormales, le premier réseau de neurones (HN) utilisant des parties d'images ($k_{1,1}$-$k_{T,K}$) de la vidéo (VID) associées à des personnes ($p_1$-$p_K$) détectées dans la vidéo (VID) et fournissant en sortie les premiers scores d'anomalie ($HS_1$-$HS_T$) ;
   - un deuxième sous-réseau de neurones (SN) configuré pour obtenir (S200) des deuxièmes scores d'anomalie ($SS_1$-$SS_T$) pour les segments temporels ($t_1$-$t_T$), les deuxièmes scores d'anomalie ($SS_1$-$SS_T$) étant représentatifs d'événements anormaux dans la scène, le deuxième sous-réseau de neurones (SN) utilisant des images entières de la vidéo (VID) et fournissant en sortie les deuxièmes scores d'anomalie ($SS_1$-$SS_T$) ; et
   - un coupleur (CPL) configuré pour obtenir (S300) des scores d'anomalie agrégés ($AS_1$-$AS_T$) pour les segments temporels ($t_1$-$t_T$) sur la base d'une somme pondérée des premiers et deuxièmes scores d'anomalie ($HS_1$-$HS_T$, $SS_1$-$SS_T$).

13. Dispositif (APP) pour détecter au moins une anomalie dans une vidéo (VID), le dispositif (APP) comprenant un réseau de neurones (HSN) selon la revendication 12.

14. Système de surveillance (SYS) comprenant : une caméra (CAM) pour obtenir une vidéo (VID) ; et un dispositif (APP) selon la revendication 13 pour détecter au moins une anomalie dans la vidéo (VID).

15. Programme informatique (PROG) comprenant des instructions qui, lorsque le programme (PROG) est exécuté par au moins un processeur (PROC), amènent ledit au moins un processeur (PROC) à mettre en œuvre le procédé selon l'une quelconque des revendications 1 à 11.

**FIG. 1**

**FIG. 2A**

VID

| | | |
|---|---|---|
| **S100** | | **S200** |

HS$_1$-HS$_T$, HL$_1$-HL$_T$ | | SS$_1$-SS$_T$, SL$_1$-SL$_T$

**S300**

AS$_1$-AS$_T$

**S400**

ALM

# FIG. 2B

**T100**

RV_N, RV_A

**T200**

AS_N, AS_A

**T300**

**T310**

LC

**T320**

LI

**T330**

L

**T400**

# FIG. 3

HN

VID → HSG → $t_1$-$t_T$ → HPT → $k_{1,1}$-$k_{T,K}$ → HFE → $HF_1$-$HF_K$ → HRM → HM → HAR → $HS_1$-$HS_T$ / $HL_1$-$HL_T$

# FIG. 4A

VID

S100

S110

$t_1$-$t_T$

S120

$k_{1,1}$-$k_{T,K}$

S130

$HF_1$-$HF_K$

S140

HM

S150

$HS_1$-$HS_T$    $HL_1$-$HL_T$

# FIG. 4B

## SN

VID → **SSG** → $t_1$-$t_T$ → **SFE** → $SF_{1T}$ → **SRM** → SM → **SAR** → $SS_1$-$SS_T$

$t'_1$-$t'_{2T}$ → $SF_{2T}$

$t''_1$-$t''_{3T}$ → $SF_{3T}$

→ $SL_1$-$SL_T$

# FIG. 5A

## SRM

$SF_{1T}$ → **BT2**

$SF_{2T}$ → **BT1** → **CT1** → **TD2**

$SF_{3T}$ → **TD1**

**CT2** → **LSTM** → SM

# FIG. 5B

VID ↓

**S200**

**S210** ↓ $t_1$-$t_T$, $t'_1$-$t'_{2T}$, $t''_1$-$t''_{3T}$

**S220** ↓ $SF_{1T}$, $SF_{2T}$, $SF_{3T}$

**S230** ↓ SM

**S240**

$SS_1$-$SS_T$        $SL_1$-$SL_T$

# FIG. 5C

## FIG. 6A

## FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Real-world anomaly detection in surveillance videos. **SULTANI et al.** IEEE Conference on Computer Vision and Pattern Recognition. 2018
- **SINGH KULDEEP et al.** Crowd anomaly detection using Aggregation of Ensembles of fine-tuned ConvNets. *1-15 INV. G06V20/40 G06V20/52 NEUROCOMPUTING, ELSEVIER, AMSTERDAM, NL*, 27 August 2019, vol. 371, ISSN 0925-2312, 188-198
- A Hierarchical Spatio-Temporal Graph Convolutional Neural Network for Anomaly Detection in Videos. **XIANLIN ZENG et al.** ARXIV.ORG. CORNELL UNIVERSITY LIBRARY, 08 December 2021

- **ZHANG et al.** *ByteTrack: Multi-Object Tracking by Associating Every Detection Box*, 2021
- **JOAO CARREIRA et al.** Quo Vadis, Action Recognition? A New Model and the Kinetics Dataset. *IEEE Conference on Computer Vision and Pattern Recognition*, 2017
- **CHRISTOPH FEICHTENHOFE**. X3d: Expanding architectures for efficient video recognition. *Proceedings of the IEEE Conference on Computer Vision and Pattern Recognition*, 2020